# EUROPEAN PATENT APPLICATION

(11) **EP 4 794 414 A1**
(43) Date of publication of application: **19.08.2026**
(21) Application number: 24884908.5
(22) Date of filing: 31.10.2024
(51) Int. Cl.: H04W 72/044

(54) **COMMUNICATION METHOD AND APPARATUS**

(30) Priority: 03.11.2023 CN 202311462409
(71) Applicant: HUAWEI TECHNOLOGIES CO., LTD., Shenzhen 518129 (CN)
(72) Inventor: LI, Zhongfeng, Shenzhen, Guangdong 518129 (CN); MA, Jianglei, Shenzhen, Guangdong 518129 (CN)
(74) Representative: Pfenning, Meinig & Partner mbB
(86) International application number: PCT/CN2024/128910
(87) International publication number: WO 2025/092909

(57) **Abstract**

A communication method and apparatus are disclosed. The method includes: A terminal device receives a first message, and sends sensing information on a first resource based on first resource information. The first message includes the first resource information. The first resource information indicates the first resource. The first resource is a resource for sensing reporting. The first resource is associated with a preamble. According to the method, the terminal device may send the sensing information with the preamble. In this way, the terminal device can transmit the sensing information without entering an RRC connected state. In comparison with transmitting the sensing information based on an SDT mechanism, a transmission delay of the sensing information can be reduced, to improve reliability of sensing information transmission.

## Description

### CROSS-REFERENCE TO RELATED APPLICATIONS

This application claims priority to Chinese Patent Application No. 202311462409.0, filed with the China National Intellectual Property Administration on November 3, 2023 and entitled "COMMUNICATION METHOD AND APPARATUS", which is incorporated herein by reference in its entirety.

### TECHNICAL FIELD

This application relates to the field of sensing technologies, and in particular, to a communication method and apparatus.

### BACKGROUND

With development of a 5th generation (the 5th generation, 5G) network, a new service, for example, a sensing service, emerges. A sensing device may sense a to-be-sensed target, to determine attribute information, for example, location information, of the sensed target. To meet a requirement of the sensing service, an integrated sensing and communication technology is proposed. A core idea of the technology is to add a sensing capability to a mobile communication network and build a capability of detecting, tracking, and imaging a target, so that communication and sensing are integrated into one network.

In an integrated sensing and communication network, a terminal device may send sensing information to a network device, so that the network device determines attribute information of the terminal device based on the received sensing information. For a terminal device in a radio resource control (radio resource control, RRC) inactive (inactive) state, to reduce a transmission delay of sensing data, a small data transmission (small data transmission, SDT) mechanism is proposed for transmission. However, when the sensing data is transmitted based on the SDT mechanism, it is difficult to ensure that the terminal device in the RRC inactive state reports the sensing information in a timely manner, and the sensing information even cannot be reported, affecting normal running of the sensing service.

### SUMMARY

This application provides a communication method and a communication apparatus, to reduce a transmission delay of sensing information and improve reliability of sensing information transmission.

To achieve the foregoing objective, the following technical solutions are used in embodiments of this application.

According to a first aspect, an embodiment of this application provides a communication method. The method may be performed by a first communication apparatus. The first communication apparatus may be a terminal device, or the first communication apparatus is a component for implementing a function of a terminal device. For example, the first communication apparatus is a unit/module, a circuit, or a chip in the terminal device. The method provided in the first aspect is described below by using an example in which the first communication apparatus is the terminal device.

The communication method includes: The terminal device receives a first message, and sends a sensing reporting result on a first resource based on first resource information. The first message includes the first resource information. The first resource information indicates the first resource. The first resource is a resource for sensing reporting. The first resource is associated with a preamble.

Optionally, sensing information may include one or more of the following: a sensing measurement result obtained by measuring at least one type of sensing signal bandwidth, a sensing capability, sensing measurement bandwidth indication information, or preamble indication information. The sensing measurement bandwidth indication information may indicate bandwidth associated with the sensing measurement result.

In this solution, the first resource is a resource for sensing information reporting (which may be referred to as sensing reporting for short), and the first resource is associated with the preamble. For example, the first resource is a control channel or a data channel associated with the preamble. The preamble may be a random access preamble. That the terminal device sends the sensing information on the first resource may be considered as that the terminal device sends the sensing information with the preamble on the first resource or the terminal device sends the sensing information on the first resource corresponding to the preamble. In this way, the terminal device does not need to perform RRC connection, and the sensing information is transmitted by using a resource specially configured for sensing information reporting. In comparison with transmitting the sensing information based on an SDT mechanism because a resource for transmitting positioning information cannot be ensured, a transmission delay of the sensing information can be reduced, to improve reliability of sensing information transmission. Because the terminal device does not need to perform RRC connection, this solution is particularly applicable to a terminal device in an RRC inactive (inactive) state and a terminal device in an RRC idle (idle) state, and has a wider application scope. In addition, this solution is also applicable to some terminal devices that are in a low-power connected state or that are configured to be in a low power mode (for example, a power consumption requirement is lower than a specific threshold), and the low power terminal device does not need to perform interaction such as resource requesting and reporting buffering.

In an implementation, the method further includes: The terminal device receives a sensing capability request, and reports a sensing capability in response to the sensing capability request. The sensing capability request is used to request to obtain a sensing capability of at least one terminal device.

In this solution, the terminal device may report the sensing capability in response to the sensing capability request of a network device, so that the first message configured by the network device matches an actual sensing capability of the terminal device.

In an implementation, the sensing capability request is carried in a sensing system message, and the sensing system message is used for sensing. The sensing system message further includes a first condition and second resource information. The first condition indicates to request to obtain a sensing capability of at least one terminal device that meets the first condition. The second resource information indicates a resource for reporting the sensing capability.

In this solution, the first condition may indicate a terminal device that meets a specific condition to report a sensing capability, so that the terminal device that meets the specific condition is selected to participate in sensing, to meet an actual sensing requirement to a maximum extent.

In an implementation, a resource indicated by the first resource information is associated with a preamble.

In this solution, a resource for reporting the sensing capability is associated with a preamble, so that the terminal device can report the sensing capability in a random procedure, report the sensing capability in a random sensing reporting procedure, or report the sensing capability in a random access procedure, and the terminal device can transmit the sensing capability without entering an RRC connected state.

In an implementation, the first condition includes one or more of the following: a first signal quality threshold, at least one signal quality range, at least one bandwidth range, at least one bandwidth value, first area information, a first angular resolution range, a first speed range, a first sensing method, or a first beam range.

The first signal quality threshold indicates to request to obtain received signal quality of a terminal device whose received signal quality is higher than the first signal quality threshold. The received signal quality of the terminal device may be considered as a sensing capability of the terminal device. If received signal quality of a terminal device is lower than the first signal quality threshold, the terminal device does not need to report a sensing capability, to reduce resource overheads and reduce energy consumption. Setting the first signal quality threshold can limit a quantity of terminal devices participating in sensing measurement, to reduce resource conflicts between terminal devices. In addition, only a terminal device whose received signal quality is higher than or equal to the first signal quality threshold reports a sensing capability. This can ensure reliability of sensing capability reporting and ensure specific sensing precision.

The at least one signal quality range indicates to request to obtain received signal quality of a terminal device whose received signal quality is within the at least one signal quality range. If received signal quality of a terminal device is not within any one of the at least one signal quality range, the terminal device does not need to report a sensing capability. This can prevent a terminal device that does not meet a signal quality requirement from participating in sensing, to reduce resource overheads, reduce interference, and reduce energy consumption.

The at least one bandwidth range indicates to request to obtain a bandwidth capability of a terminal device whose bandwidth capability is within the at least one bandwidth range. If sensing bandwidth of a terminal device is not within any one of the at least one bandwidth range, the terminal device does not need to report a sensing result, to reduce resource overheads and reduce energy consumption. Setting the at least one bandwidth range can enable terminal devices that have different bandwidth capabilities and that meet a bandwidth requirement to participate in sensing, to obtain, as far as possible, a collaborative sensing result of the terminal devices that meet the bandwidth requirement, and obtain an accurate sensing result.

The at least one bandwidth value indicates to request to obtain a bandwidth capability of a terminal device whose bandwidth capability corresponds to the at least one bandwidth value. If sensing bandwidth of a terminal device is not any configured bandwidth value, the terminal device does not need to report a sensing result, to reduce resource overheads, avoid interference, and reduce energy consumption. Setting the at least one bandwidth value can enable terminal devices with different bandwidth capabilities to participate in sensing, to obtain, as far as possible, a collaborative sensing result of terminal devices that meet a bandwidth requirement, and obtain an accurate sensing result.

The first area information indicates to request to obtain a sensing capability of a terminal device located in a first area. Configuring the first area information can enable the network device to request a sensing capability only from a terminal device in an area with a sensing requirement. In this way, a quantity of terminal devices participating in sensing is limited, and a terminal device that does not participate in sensing does not need to report a sensing capability, to save resources, reduce energy consumption, and reduce interference.

The first angular resolution range indicates to request to obtain a sensing capability of a terminal device whose angular resolution is within the first angular resolution range. In this way, a quantity of terminal devices participating in sensing is limited. If an angular resolution is not within the first angular resolution range, the terminal device does not need to report a sensing capability, to save resources, reduce energy consumption, and reduce interference.

The first speed range indicates to request to obtain a sensing capability of a terminal device within the first speed range. Configuring the first speed range can enable the network device to request a sensing capability only from a terminal device at a specific moving speed. This can reduce sensing capability reporting of a terminal device that is not within the first speed range. In this way, a quantity of terminal devices participating in sensing is limited, to save resources, reduce energy consumption, and reduce interference.

The first beam range indicates to request to obtain a sensing capability of a terminal device within the first beam range. By configuring the first beam range, a sensing capability of a terminal device within a specific angle range can be requested. In this way, a quantity of terminal devices participating in sensing is limited, to save resources, reduce energy consumption, reduce interference, and implement sensing within the specific angle range.

The first sensing method indicates to request to obtain a sensing capability of a terminal device that supports the first sensing method. By configuring the first sensing method, a sensing capability of a terminal device that supports a specific sensing method can be requested. In this way, a quantity of terminal devices participating in sensing is limited, to save resources, reduce energy consumption, reduce interference, and implement sensing with the specific sensing method.

In an implementation, the first message is further used to configure one or more of the following: a transmission parameter of a sensing signal, a sensing method, the first resource, or a second condition, where the second condition indicates a terminal device that meets the second condition to perform sensing reporting.

In an implementation, the second condition includes one or more of the following: a second signal quality threshold, at least one signal quality range, at least one bandwidth range, at least one bandwidth value, second area information, a second angular resolution range, a second speed range, a second sensing method, or a second beam range.

The second signal quality threshold indicates a terminal device whose received signal quality is higher than the second signal quality threshold to perform sensing reporting. If received signal quality of a terminal device is lower than the second signal quality threshold, the terminal device does not need to report a sensing result, to reduce resource overheads and reduce energy consumption. Configuring the second signal quality threshold can limit a quantity of terminal devices participating in sensing measurement, to reduce resource conflicts between terminal devices in the case of reporting sensing results. In addition, a terminal device whose received signal quality is higher than or equal to the second signal quality threshold performs sensing reporting. This can further ensure reliability of sensing reporting and specific sensing precision.

The at least one signal quality range indicates a terminal device whose received signal quality is within the at least one signal quality range to perform sensing reporting. If received signal quality of a terminal device is not within any one of the at least one signal quality range, the terminal device does not need to report a sensing result. This can prevent a terminal device that does not meet a signal quality requirement from participating in sensing, to reduce resource overheads, reduce interference, and reduce energy consumption. Configuring the at least one signal quality range can further limit a quantity of terminal devices participating in sensing reporting, to minimize resource conflicts between terminal devices in the case of reporting sensing results.

The at least one bandwidth range indicates a terminal device whose bandwidth capability is within the at least one bandwidth range to perform sensing reporting. If sensing bandwidth of a terminal device is not within any one of the at least one bandwidth range, the terminal device does not need to report a sensing result, to reduce resource overheads and reduce energy consumption. Configuring the at least one bandwidth range can enable all terminal devices that meet a bandwidth requirement to participate in sensing, to obtain, as far as possible, a collaborative sensing result of the terminal devices that meet the bandwidth requirement, and obtain an accurate sensing result.

The at least one bandwidth value indicates a terminal device whose bandwidth capability is within the at least one bandwidth value to perform sensing reporting. If sensing bandwidth of a terminal device is not any one of the at least one bandwidth value, the terminal device does not need to report a sensing result, to reduce resource overheads and reduce energy consumption. Configuring the at least one bandwidth value can enable all terminal devices that meet a bandwidth requirement to participate in sensing, to obtain, as far as possible, a collaborative sensing result of the terminal devices that meet the bandwidth requirement, and obtain an accurate sensing result.

The second area information indicates a terminal device located in a second area to perform sensing reporting. Configuring the second area information can enable the network device to initiate a sensing request only to an area with a sensing requirement. In this way, a quantity of terminal devices participating in sensing is limited, to save resources, reduce energy consumption, and reduce interference.

The second angular resolution range indicates a terminal device whose angular resolution is within the second angular resolution range to perform sensing reporting. In this way, a quantity of terminal devices participating in sensing is limited. If an angular resolution is not within the second angular resolution range, the terminal device does not need to report a sensing result, to save resources, reduce energy consumption, and reduce interference. Configuring the second angular resolution range can ensure high precision of a sensing result reported by the terminal device.

The second speed range indicates a terminal device within the second speed range to perform sensing reporting. Configuring the second speed range can enable the network device to request sensing only from a terminal device at a specific moving speed. In this way, a quantity of terminal devices participating in sensing is limited, to save resources, reduce energy consumption, and reduce interference.

The second beam range indicates a terminal device corresponding to a beam that carries the sensing signal and that is within the second beam range to perform sensing reporting. Configuring the second beam range can enable a terminal device within a specific angle range to perform sensing. In this way, a quantity of terminal devices participating in sensing is limited, to save resources, reduce energy consumption, reduce interference, and implement sensing within the specific angle range.

The second sensing method indicates to request to obtain a sensing capability of a terminal device that supports the second sensing method. By configuring the second sensing method, a sensing capability of a terminal device that supports a specific sensing method can be requested. In this way, a quantity of terminal devices participating in sensing is limited, to save resources, reduce energy consumption, reduce interference, and implement sensing with the specific sensing method.

In an implementation, the transmission parameter of the sensing signal includes at least one bandwidth configuration, the at least one bandwidth configuration corresponds to at least one resource pool, the preamble associated with the first resource is selected from at least one resource pool corresponding to first bandwidth, and the first bandwidth is bandwidth of the sensing signal. In this solution, each type of bandwidth may correspond to a plurality of resource pools. In this way, the terminal device selects a corresponding resource pool based on supported sensing bandwidth, selects the preamble from the resource pool, and then reports the sensing information by using the first resource associated with the preamble, to minimize resource conflicts.

In an implementation, the first message is carried in one or more of downlink control information (downlink control information, DCI), a media access control (media access control, MAC) control element (control element, CE), or a radio resource control (radio resource control, RRC) message. The DCI includes level 1 DCI and level 2 DCI. The level 1 DCI is used to configure the transmission parameter of the sensing signal and a resource for a channel carrying the level 2 DCI. The level 2 DCI is used to configure one or more of the sensing method, the first resource information, the preamble corresponding to the first resource, a timing advance, transmit power, a modulation and coding scheme, or the second condition. The MAC CE includes one or more of the first resource information, the preamble corresponding to the first resource, a timing advance, transmit power, a modulation and coding scheme, or the second condition.

In this solution, a payload size of the level 1 DCI is relatively fixed, to reduce a quantity of times of blind detection, and the resource for the level 2 DCI is indicated by the level 1 DCI, without blind detection, to reduce complexity of the terminal device. A resource configuration of the channel carrying the level 2 DCI is indicated by the level 1 DCI, so that more content that needs to be indicated can be carried in the level 2 DCI, to support more flexible configuration of content included in the first message. In addition, the first resource information is indicated by the MAC CE or the level 2 DCI, so that respective corresponding first resources can be simultaneously configured for a plurality of terminal devices by using one piece of signaling, to reduce signaling overheads. For example, the MAC CE or the level 2 DCI may carry a plurality of preambles and information about first resources respectively corresponding to the plurality of preambles.

In an implementation, a physical downlink control channel (physical downlink control channel, PDCCH) carrying the level 1 DCI is scrambled by using a first radio network temporary identifier (radio network temporary identifier, RNTI), where the first RNTI corresponds to sensing, or the first RNTI is an RNTI that identifies sensing.

In this solution, the first RNTI may be an RNTI dedicated to sensing. The PDCCH carrying the level 1 DCI is scrambled by using the first RNTI, to distinguish the PDCCH from a PDCCH for another purpose.

In an implementation, the first message is carried in one or more of DCI, sidelink control information (sidelink control information, SCI), a MAC CE, or an RRC message. The SCI includes level 1 SCI and level 2 SCI. The level 1 SCI is used to configure the transmission parameter of the sensing signal and a resource for a channel carrying the level 2 SCI. The level 2 SCI is used to configure one or more of the sensing method, the first resource information, the preamble corresponding to the first resource, a timing advance, transmit power, a modulation and coding scheme, or the second condition. The MAC CE includes one or more of the first resource information, the preamble corresponding to the first resource, a timing advance, transmit power, a modulation and coding scheme, or the second condition.

In an implementation, the method is applied to a first terminal device, and the first terminal device meets one or more of the following: being in an RRC inactive state; being in an RRC idle state; being in an RRC connected state and having a power consumption requirement lower than a first threshold; being in a low power state; or being configured to be in a low power mode.

In an implementation, the sensing method includes one or more of a DL AoA method, a DL AoD method, a TDOA method, or a multi-cell round trip time (multi-cell round trip time, multi-RTT) method.

In an implementation, the sensing method includes one or more of a sidelink (sidelink, SL) AoA method, an SL AoD method, a TDOA method, or an RTT method.

In an implementation, when a bandwidth capability of the first terminal device is greater than or equal to the first bandwidth, a sensing method used by the first terminal device is one or more of the DL AoA method, the DL AoD method, the TDoA method, or the multi-RTT, to obtain a sensing result with a high time resolution.

In an implementation, when a bandwidth capability of the first terminal device is less than the first bandwidth, a sensing method used by the first terminal device is the DL AoA method and/or the DL AoD method. Because low bandwidth cannot support a high time resolution, when the bandwidth capability of the first terminal device is less than the first bandwidth, the DL AoA method and/or the DL AoD method are/is used, to obtain a sensing result with a high angular resolution.

In an implementation, when a bandwidth capability of the first terminal device is greater than or equal to the first bandwidth, a sensing method used by the first terminal device is one or more of the SL AoA method, the SL AoD method, the TDoA method, or the RTT method, or a sensing method used by the first terminal device is the TDoA method and/or the RTT method; or when a bandwidth capability of the first terminal device is less than the first bandwidth, a sensing method used by the first terminal device is the SL AoA method and/or the SL AoD method.

In an implementation, the first message is a message dedicated to sensing. For example, the first message is a sensing system message, and the sensing system message is used for sensing.

In an implementation, that the terminal device receives the first message includes: The terminal device receives a response to the sensing capability, where the response includes the first message. In this solution, the first message may be the response to the sensing capability, or the first message is a part of the response to the sensing capability.

In an implementation, transmission of a sensing signal is a part of the response.

In an implementation, before receiving the first message, the method further includes: The terminal device receives a second message, where the second message is used to schedule the first message, and the second message includes information about a first time window and/or beam information. The information about the first time window indicates to detect the first message within the first time window. The beam information indicates a transmit beam for the first message.

In this solution, the first message is scheduled by the second message, so that the terminal device determines how to receive the first message.

In an implementation, the transmit beam for the first message is at least one beam that carries the second message.

In this solution, the first message is associated with a specific beam. For example, at least one beam for sending/carrying the second message is the transmit beam for the first message. According to this solution, sensing in a specific direction/specific range can be implemented. In addition, sending the first message on the specific beam can further reduce potential interference to communication or sensing in a network.

According to a second aspect, an embodiment of this application provides a communication method. The method may be performed by a second communication apparatus. The second communication apparatus may be a network device, or the second communication apparatus is a component for implementing a function of a network device. For example, the second communication apparatus is a unit/module, a circuit, or a chip in the network device. The method provided in the second aspect is described below by using an example in which the second communication apparatus is the network device.

The communication method includes: The network device sends a first message, and receives sensing information on a first resource. The first message includes first resource information. The first resource information indicates the first resource. The first resource is a resource for sensing information reporting. The first resource is associated with a preamble.

The sensing information includes one or more of the following: a sensing measurement result obtained by measuring at least one type of sensing signal bandwidth, a sensing capability, sensing measurement bandwidth indication information, or preamble indication information. The sensing measurement bandwidth indication information may indicate bandwidth associated with the sensing measurement result.

In an implementation, the method further includes: The network device sends a sensing capability request, and receives a sensing capability of a first terminal device in response to the sensing capability request. The sensing capability request is used to request to obtain a sensing capability of at least one terminal device.

In an implementation, the sensing capability request is carried in a sensing system message, and the sensing system message is used for sensing. The sensing system message further includes a first condition and second resource configuration information. The first condition indicates to obtain a sensing capability of at least one terminal device that meets the first condition. The second resource information indicates a resource for reporting the sensing capability.

In an implementation, the resource indicated by the second resource information is associated with a preamble.

In an implementation, the first condition includes one or more of the following:
a first signal quality threshold, indicating to request to obtain received signal quality of a terminal device whose received signal quality is higher than the first signal quality threshold;
at least one signal quality range, indicating to request to obtain received signal quality of a terminal device whose received signal quality is within the at least one signal quality range;
at least one bandwidth range, indicating to request to obtain a bandwidth capability of a terminal device whose bandwidth capability is within the at least one bandwidth range;
at least one bandwidth value, indicating to request to obtain a bandwidth capability of a terminal device whose bandwidth capability is the at least one bandwidth value;
first area information, indicating to request to obtain a sensing capability of a terminal device located in a first area, where the first area information indicates the first area;
a first angular resolution range, indicating to request to obtain a sensing capability of a terminal device whose angular resolution is within the first angular resolution range;
a first speed range, indicating to request to obtain a sensing capability of a terminal device within the first speed range;
a first beam range, indicating to request to obtain a sensing capability of a terminal device corresponding to a beam that carries the sensing signal and that is within the first beam range; or
a first sensing method, indicating to request to obtain a sensing capability of a terminal device that supports the first sensing method.

In an implementation, the first message is further used to configure one or more of the following: a transmission parameter of a sensing signal, a sensing method, a sensing result reporting manner, or a second condition, where the second condition indicates a terminal device that meets the second condition to perform sensing reporting.

In an implementation, the second condition includes one or more of the following:
a second signal quality threshold, indicating a terminal device whose received signal quality is higher than the second signal quality threshold to perform sensing reporting;
at least one signal quality range, indicating a terminal device whose received signal quality is within the at least one signal quality range to perform sensing reporting;
at least one bandwidth range, indicating a terminal device whose bandwidth capability is within the at least one bandwidth range to perform sensing reporting;
at least one bandwidth value, indicating a terminal device whose bandwidth capability is within the at least one bandwidth value to perform sensing reporting;
second area information, indicating a terminal device located in a second area to perform sensing reporting, where the second area information indicates the second area;
a second angular resolution range, indicating a terminal device whose angular resolution is within the second angular resolution range to perform sensing reporting;
a second speed range, indicating a terminal device within the second speed range to perform sensing reporting;
a second beam range, indicating a terminal device corresponding to a beam that carries the sensing signal and that is within the second beam range to perform sensing reporting; or
a second sensing method, indicating a terminal device that supports the second sensing method to perform sensing reporting.

In an implementation, the sensing parameter includes at least one bandwidth configuration, the at least one bandwidth configuration corresponds to at least one resource pool, the preamble associated with the first resource belongs to at least one resource pool corresponding to first bandwidth, and the first bandwidth is bandwidth of the sensing signal.

In an implementation, the first message is carried in one or more of DCI, a MAC CE, or an RRC message. The DCI includes level 1 DCI and level 2 DCI. The level 1 DCI is used to configure the transmission parameter of the sensing signal and a resource for a channel carrying the level 2 DCI. The level 2 DCI is used to configure one or more of the sensing method, the first resource information, the preamble corresponding to the first resource, a timing advance, transmit power, a modulation and coding scheme, or the second condition. The MAC CE includes one or more of the first resource information, the preamble corresponding to the first resource, a timing advance, transmit power, a modulation and coding scheme, or the second condition.

In an implementation, a PDCCH carrying the level 1 DCI is scrambled by using a first RNTI, and the first RNTI corresponds to sensing.

In an implementation, the sensing method includes one or more of a DL AoA method, a DL AoD method, a TDoA method, or multi-RTT.

In an implementation, the first message is carried in one or more of DCI, sidelink control information (sidelink control information, SCI), a MAC CE, or an RRC message. The SCI includes level 1 SCI and level 2 SCI. The level 1 SCI is used to configure the transmission parameter of the sensing signal and a resource for a channel carrying the level 2 DCI. The level 2 SCI is used to configure one or more of the sensing method, the first resource information, the preamble corresponding to the first resource, a timing advance, transmit power, a modulation and coding scheme, or the second condition. The MAC CE includes one or more of the first resource information, the preamble corresponding to the first resource, a timing advance, transmit power, a modulation and coding scheme, or the second condition.

In an implementation, the sensing method includes one or more of a DL AoA method, a DL AoD method, a TDOA method, or a multi-RTT method.

In an implementation, the sensing method includes one or more of a sidelink (sidelink, SL) AoA method, an SL AoD method, a TDOA method, or an RTT method.

In an implementation, a bandwidth capability of a terminal device is greater than or equal to the first bandwidth, and a sensing method used by the terminal device is one or more of the DL AoA method, the DL AoD method, the TDoA method, or the multi-RTT; or when a bandwidth capability of a terminal device is less than the first bandwidth, a sensing method used by the terminal device is the DL AoA method and/or the DL AoD method.

In an implementation, when a bandwidth capability of the first terminal device is greater than or equal to the first bandwidth, a sensing method used by the first terminal device is one or more of the SL AoA method, the SL AoD method, the TDoA method, or the RTT method, or a sensing method used by the first terminal device is the TDoA method and/or the RTT method; or when a bandwidth capability of the first terminal device is less than the first bandwidth, a sensing method used by the first terminal device is the SL AoA method and/or the SL AoD method.

In an implementation, the first message is a sensing system message, and the sensing system message is used for sensing.

In an implementation, sending the first message includes: sending a response to the sensing capability, where the response includes the first message.

In an optional implementation, sending the first message includes: sending a response to the sensing capability, where the response includes a plurality of preambles and a sensing information reporting resource corresponding to each preamble. A terminal device reports sensing information on a sensing information reporting resource corresponding to a preamble, and the network device may determine, based on the preamble corresponding to the sensing information reporting resource, bandwidth corresponding to the sensing information. The sensing information reporting resource is a resource for reporting the sensing information.

In an implementation, transmission of the sensing signal is a part of the response.

In an implementation, before receiving the first message, the method is as follows: The network device sends a second message, where the second message is used to schedule the first message, and the second message includes information about a first time window and/or beam information. The first time window indicates to detect the first message within the first time window. The beam information indicates a transmit beam for the first message.

In an implementation, the transmit beam for the first message is at least one beam that carries the second message.

For beneficial effects of the second aspect and the implementations, refer to the beneficial effects of the first aspect and the implementations. Details are not described herein again.

According to a third aspect, an embodiment of this application provides a communication apparatus. The communication apparatus has a function of implementing the behavior in the method example in the first aspect or the second aspect. For beneficial effects, refer to related descriptions in the first aspect or the second aspect. Details are not described herein again. For example, the communication apparatus may be the terminal device in the first aspect, or the communication apparatus may be the network device in the second aspect. For another example, the communication apparatus may be an apparatus that can support the terminal device in implementing a function needed for the method provided in the first aspect. For example, the communication apparatus may be a chip or a chip system in the terminal device. Alternatively, for another example, the communication apparatus may be an apparatus that can support the network device in implementing a function needed for the method provided in the second aspect. For example, the communication apparatus may be a chip or a chip system in the network device.

In a possible design, the communication apparatus includes a baseband apparatus and a radio frequency apparatus.

In a possible design, the communication apparatus includes a corresponding means (means) or module for performing the method in the first aspect or the second aspect. For example, the communication apparatus includes a processing unit (sometimes also referred to as a processing module or a processor) and/or a transceiver unit (sometimes also referred to as a transceiver module or a transceiver). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional unit, the functional unit is referred to as the transceiver unit, and the functional unit can implement the sending function and the receiving function. Alternatively, the sending unit and the receiving unit may be different functional units, and the transceiver unit is a general term for these functional units. These units (modules) may perform corresponding functions in the method example in the first aspect or the second aspect. For details, refer to detailed descriptions in the method example. Details are not described herein again.

According to a fourth aspect, an embodiment of this application provides a communication apparatus. The communication apparatus may be the communication apparatus in the third aspect of the foregoing embodiments, or may be a chip or a chip system disposed in the communication apparatus in the third aspect. The communication apparatus includes a communication interface and a processor, and optionally, further includes a memory. The memory is configured to store a computer program, instructions, or data, and the processor is coupled to the memory and the communication interface. When the processor reads the computer program, the instructions, or the data, the communication apparatus is enabled to perform the method performed by the terminal device in the foregoing method embodiments. For example, the communication apparatus may be a terminal device, or a functional module, for example, a baseband chip and a radio frequency chip, in a terminal device. Alternatively, when the processor reads the computer program, the instructions, or the data, the communication apparatus is enabled to perform the method performed by the network device in the foregoing method embodiments. For example, the communication apparatus may be a network device, or a functional module, for example, a baseband chip and a radio frequency chip, in a network device.

According to a fifth aspect, an embodiment of this application provides a chip system. The chip system includes a processor, and may further include a communication interface, configured to implement the method in the first aspect or the second aspect. Optionally, the chip system further includes a memory. The memory is configured to store a computer program (which may also be referred to as code or instructions). The processor is configured to invoke the computer program from the memory and run the computer program, to enable a device in which the chip system is installed to perform the method in any one of the first aspect or the possible implementations of the first aspect, or enable a device in which the chip system is installed to perform the method in any one of the second aspect or the possible implementations of the second aspect. The chip system may include a chip, or may include a chip and another discrete component.

According to a sixth aspect, an embodiment of this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method in the first aspect or the second aspect.

During specific implementation, the communication apparatus may be a chip, the input circuit may be an input pin, the output circuit may be an output pin, and the logic circuit may be a transistor, a gate circuit, a trigger, various logic circuits, or the like. An input signal received by the input circuit may be received and input by, for example, but not limited to, a receiver. A signal output by the output circuit may be output to and transmitted by, for example, but not limited to, a transmitter. In addition, the input circuit and the output circuit may be a same circuit, and the circuit serves as the input circuit and the output circuit at different moments. Specific implementations of the input/output interface and the logic circuit are not limited in this application.

In an implementation, when the communication apparatus is a wireless communication device, the wireless communication device may be a terminal device like a mobile phone. The interface circuit may be a radio frequency processing chip in the wireless communication device, and a processing circuit may be a baseband processing chip in the wireless communication device.

According to a seventh aspect, an embodiment of this application provides a communication system. The communication system includes a terminal device and a network device. The terminal device is configured to implement a function of the method in the first aspect, and the network device is configured to implement a function of the method in the second aspect.

According to an eighth aspect, an embodiment of this application provides a computer-readable storage medium. The computer-readable storage medium is configured to store a computer program or instructions. When the computer program or the instructions are run, the method in any one of the first aspect or the possible implementations of the first aspect is implemented, or the method in any one of the second aspect or the possible implementations of the second aspect is implemented.

According to a ninth aspect, an embodiment of this application provides a computer program product including instructions. When the computer program product is run on a computer, the method in any one of the first aspect or the possible implementations of the first aspect is implemented, or the method in any one of the second aspect or the possible implementations of the second aspect is implemented.

For beneficial effects of the third aspect to the ninth aspect and the implementations of the third aspect to the ninth aspect, refer to the descriptions of the beneficial effects of any one of the first aspect, the second aspect, or the possible implementations of the first aspect and the second aspect.

### BRIEF DESCRIPTION OF DRAWINGS

FIG. 1 is a diagram of an architecture of a communication system according to an embodiment of this application;
FIG. 2 is a schematic flowchart of a communication method 200 according to an embodiment of this application;
FIG. 3 is a schematic flowchart of a communication method 300 according to an embodiment of this application;
FIG. 4 is a schematic flowchart of a communication method 400 according to an embodiment of this application;
FIG. 5 is a diagram of a structure of a communication apparatus according to an embodiment of this application; and
FIG. 6 is a diagram of another structure of a communication apparatus according to an embodiment of this application.

### DESCRIPTION OF EMBODIMENTS

In embodiments of this application, a sensing device reports sensing information (for example, a sensing result or a sensing capability) or the like in a random access procedure or a random sensing reporting procedure. According to a method provided in embodiments of this application, a terminal device can transmit sensing information without entering an RRC connected state. In comparison with transmitting the sensing information based on an SDT mechanism supported in the random access procedure, a transmission delay of the sensing information can be reduced, to improve reliability of sensing information transmission. It can be understood that the SDT mechanism means that typical small-packet data may be transmitted in a data channel (for example, a physical uplink shared channel (physical uplink shared channel, PUSCH)) as a payload. A specific name of SDT is not limited. The solutions provided in embodiments of this application are further described below with reference to the accompanying drawings.

The solutions provided in embodiments of this application may be applied to a communication system including a sensing device. The sensing device is a device with a sensing function. For example, the sensing device is a terminal device with a sensing function. The sensing device is also referred to as a sensing apparatus, a detector, or the like. The sensing device may determine attribute information of a sensed target by sending a signal (the signal is also referred to as a sensing signal) and receiving a signal (also referred to as an echo signal) that is obtained by reflecting the sent signal by the sensed target. Alternatively, the sensing device may send, to another device, a measurement result of a received echo signal sent by the another device, and the another device determines attribute information of a sensed target. The attribute information of the sensed target includes a speed, a distance, a posture, a shape, a size, a location, and the like of the sensed target. The sensing signal is a signal for sensing the sensed target, and is also referred to as a sounding signal, a radar signal, a radar sensing signal, a radar sounding signal, an environment sensing signal, a reference signal, or the like. The sensing signal may be a pulse signal, or may be a possible signal in a wireless communication system, for example, a sounding reference signal (sounding reference signal, SRS), a demodulation reference signal (demodulation reference signal, DMRS), a channel state information reference signal (channel state information reference signal, CSI-RS), a synchronization signal and physical broadcast channel (physical broadcast channel, PBCH) block (synchronization signal/PBCH block, SSB), or a synchronization signal.

Embodiments of this application may be used to sense a surrounding environment. For example, embodiments of this application may be applied to ground traffic detection, to determine a vehicle speed, whether a vehicle occupies an emergency lane, or whether a vehicle illegally changes a lane. In this case, the sensing device may be installed in a mobile device, for example, installed in a motor vehicle (for example, an uncrewed vehicle, an intelligent vehicle, an electric vehicle, or a digital vehicle), an uncrewed aerial vehicle, a rail vehicle, a bicycle, a speed measurement apparatus, or a terminal device. The sensing device may alternatively be installed in a stationary device, for example, installed in a drive test apparatus or a signal light. For another example, embodiments of this application may be applied to air traffic detection, weather detection, safety detection, or electromagnetic imaging. A sensing application scenario is not limited in embodiments of this application.

With development of technologies, an integrated sensing and communication technology is proposed. A core idea of the technology is to add a sensing capability to a mobile communication network and build a capability of detecting, tracking, and imaging a target, so that communication and sensing are integrated into one network.

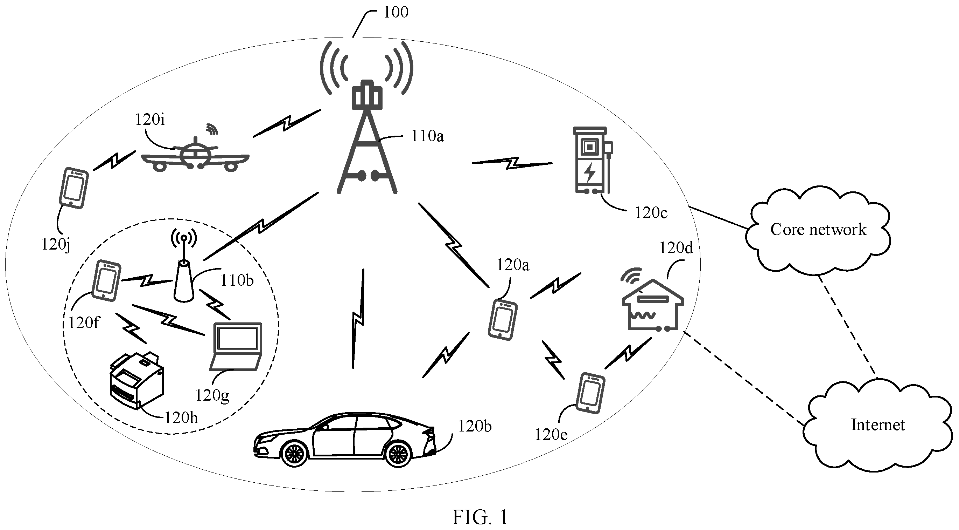

FIG. 1 is a diagram of an architecture of a communication system according to an embodiment of this application. The communication system shown in FIG. 1 may be a 3rd generation partnership project (the 3rd generation partnership project, 3GPP)-related communication system that integrates a sensing capability. The 3GPP-related communication system may be a long term evolution (long term evolution, LTE) communication system or a 5th generation (the 5th generation, 5G) mobile communication system, or may be applied to another next-generation mobile communication system, for example, a 6th generation (6G) communication system, or another similar communication system. The another similar communication system may include wireless fidelity (wireless fidelity, Wi-Fi), vehicle-to-everything (vehicle-to-everything, V2X), an internet of things (internet of things, IoT) system, a narrowband internet of things (narrowband internet of things, NB-IoT) system, or the like.

For example, the communication system includes a radio access network 100 and a core network. Optionally, the communication system may further include an internet. The radio access network 100 may include at least one network device and at least one terminal device. For example, the radio access network 100 includes two network devices 110a and 110b and terminal devices 120a to 120j. The terminal devices 120a to 120j may serve as sensing devices. Alternatively, a part of the terminal devices 120a to 120j may serve as sensing devices, and another part of terminal devices are common terminal devices. The common terminal device is defined relative to the sensing device, and the common terminal device has no sensing capability. In embodiments of this application, the sensing device may be a device for implementing a sensing function, or may be an apparatus, for example, a chip system, that can support a device in implementing a sensing function. The sensing device may be a network device. For example, the sensing device is a relay device or a base station. The sensing device may alternatively be a terminal device, or the sensing device may be installed in a terminal device. For example, the sensing device may be a vehicle detector or a sensor at a gas station, and is installed in a terminal device. In embodiments of this application, the terminal device includes an apparatus with a sensing function, and is interchangeable with the sensing device. Unless otherwise specified, the sensing device and the terminal device have a same meaning in the following descriptions.

It should be noted that the network architecture shown in FIG. 1 is merely an example, and there may be fewer or more terminal devices and/or network devices. The communication system described in embodiments of this application is intended to describe the technical solutions in embodiments of this application more clearly, but constitutes no limitation on a communication system to which embodiments of this application are applicable. For example, the communication system may further include other devices, and the other devices include, for example, a wireless relay device and a wireless backhaul device, which are not shown in FIG. 1. It can be learned by a person of ordinary skill in the art that the technical solutions provided in embodiments of this application are also applicable to similar technical problems with evolution of the network architecture. When the technical solutions in embodiments of this application are applied to another communication system, the devices, components, modules, and the like in embodiments may be replaced with corresponding devices, components, and modules in the another communication system. This is not limited.

The network device in embodiments of this application is mainly an access network device. Therefore, in the following descriptions, unless otherwise specified, the "network device" is a radio access network (radio access network, RAN) device, and may be referred to as the access network device for short. A RAN may be a 3GPP-related cellular system, for example, a 5G mobile communication system or a future-oriented evolved system (for example, a 6G mobile communication system). Alternatively, a RAN may be an open access network (open RAN, O-RAN, or ORAN), a cloud radio access network (cloud radio access network, CRAN), a virtual radio access network (virtual RAN, vRAN), or the like. Alternatively, a RAN may be a communication system that integrates two or more of the foregoing systems. The RAN device may also be referred to as a RAN node, a RAN entity, an access node, or the like.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next-generation base station in the 6G mobile communication system, a base station in a future mobile communication system, or the like. The RAN node may be a macro base station, a micro base station, an indoor base station, a relay node, a donor node/host node, a radio controller, or the like. The RAN node may alternatively be a server, a wearable device, a vehicle, a vehicle-mounted device, or the like. For example, a RAN node in a V2X technology may be a roadside unit (roadside unit, RSU).

In another possible scenario, the RAN node may be a module or unit that completes a part of functions of a base station; or a plurality of RAN nodes cooperate to assist the terminal device in implementing radio access, and different RAN nodes each implement a part of functions of a base station. For example, the RAN node may be a central unit (central unit, CU), a distributed unit (distributed unit, DU), or a radio unit (radio unit, RU). Functions of the CU may be implemented by one entity, or may be implemented by different entities. For example, the functions of the CU may be further divided. To be specific, a control plane and a user plane are separated and are implemented by different entities: a control plane CU entity (namely, a CU-control plane (control plane, CP) entity) and a user plane CU entity (namely, a CU-user plane (user plane, UP) entity). The CU-CP entity and the CU-UP entity may be coupled to the DU, to jointly complete functions of the RAN node. The CU and the DU may be separately disposed, or may be included in a same network element, for example, a baseband unit (baseband unit, BBU).

In different systems, the CU (or the CU-CP and the CU-UP), the DU, or the RU may alternatively have different names, but a person skilled in the art may understand meanings of the names. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, in this application, the CU, the CU-CP, the CU-UP, the DU, and the RU are used as examples for description. Any one of the CU (or the CU-CP or the CU-UP), the DU, and the RU in this application may be implemented by using a software module, a hardware module, or a combination of a software module and a hardware module.

The CU and the DU may be configured based on protocol layer functions of a wireless network that are implemented by the CU and the DU. For example, the CU is configured to implement functions of a packet data convergence protocol (packet data convergence protocol, PDCP) layer and upper protocol layers (for example, a radio resource control (radio resource control, RRC) layer and/or a service data adaptation protocol (service data adaptation protocol, SDAP) layer). The DU is configured to implement functions of protocol layers (for example, a radio link control (radio link control, RLC) layer, a media access control (media access control, MAC) layer, and/or a physical (physical, PHY) layer) below the PDCP layer. For another example, the CU is configured to implement functions of protocol layers (for example, an RRC layer and/or an SDAP layer) above a PDCP layer, and the DU is configured to implement functions of the PDCP layer and protocol layers (for example, an RLC layer, a MAC layer, and/or a PHY layer) below the PDCP layer. For specific descriptions of the foregoing protocol layers, refer to related technical specifications of the 3GPP or technical specifications of other applicable communication protocols. The foregoing division of the processing functions of the CU and the DU based on the protocol layers is merely an example, and another division manner may alternatively be used. This is not limited in this application. For example, in a design, the CU or the DU may alternatively be divided to have a part of processing functions of protocol layers. In a design, a part of functions of an RLC layer and functions of protocol layers above the RLC layer are deployed in the CU, and remaining functions of the RLC layer and functions of protocol layers below the RLC layer are deployed in the DU.

In embodiments of this application, an apparatus for implementing a function of the network device may be the network device, or may be an apparatus that can support the network device in implementing the function, for example, a chip system or a combined device or component that can implement the function of the network device. The apparatus may be installed in the network device. A specific technology and a specific device form that are used by the network device are not limited in embodiments of this application.

In embodiments of this application, any device that can perform data communication with a base station may be considered as the terminal device. The terminal device is also referred to as a terminal, user equipment (user equipment, UE), a mobile station, a mobile terminal, or the like. The terminal device may be widely used in various scenarios, for example, device-to-device (device-to-device, D2D) communication, V2X communication, machine type communication (machine type communication, MTC), IoT, virtual reality (virtual reality, VR), augmented reality (augmented reality, AR), industrial control, autonomous driving, telemedicine, a smart grid, smart furniture, a smart office, a smart wearable, smart transportation, or a smart city. For example, the terminal device may be a mobile phone, a computer, a mobile internet device (mobile internet device, MID), a wearable device, a VR device, an AR device, a robotic arm, a camera, a robot, a robotic arm, a vehicle, an uncrewed aerial vehicle, a helicopter, an airplane, a ship, a smart home device (for example, a television, an air conditioner, a vacuum cleaning robot, a speaker, or a set-top box), a relay (relay), or customer premises equipment (customer premises equipment, CPE). A specific technology and a specific device form that are used by the terminal device are not limited in embodiments of this application.

If the terminal devices described above are located in a vehicle (for example, placed/installed in the vehicle), all of the terminal devices may be considered as vehicle-mounted terminal devices. The vehicle-mounted terminal device may be an in-vehicle module, an automobile module, an onboard component, an automotive chip, or an onboard unit that is disposed in the vehicle as one or more components or units. The vehicle may implement the method in this application through the in-vehicle module, the automobile module, the onboard component, the automotive chip, or the onboard unit that is disposed in the vehicle. The vehicle-mounted terminal device may be an integrated vehicle device, an in-vehicle module, a vehicle, an onboard unit (onboard unit, OBU), a roadside unit (roadside unit, RSU), an in-vehicle infotainment system (or referred to as an in-vehicle sending unit) (telematics box, T-box), a chip, a system-on-a-chip (system-on-a chip, SOC), or the like. The chip or the SOC may be installed in the vehicle, the OBU, the RSU, or the T-box.

In embodiments of this application, an apparatus for implementing a function of the terminal device may be the terminal device, or may be an apparatus that can support the terminal device in implementing the function, for example, a chip system or a combined device or component that can implement the function of the terminal device. The apparatus may be installed in the terminal device. A specific technology and a specific device form that are used by the terminal device are not limited in embodiments of this application.

The terminal device may also be referred to as a terminal, a terminal apparatus, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, autonomous driving, telemedicine, a smart grid, smart furniture, a smart office, a smart wearable, smart transportation, and a smart city. In embodiments of this application, roles of the network device and the terminal device may be defined relative to each other. For example, a helicopter or an uncrewed aerial vehicle 120i in FIG. 1 may be configured as a mobile network device. For the terminal device 120j that accesses the radio access network 100 through 120i, the terminal device 120i is a network device. However, for the network device 110a, 120i is a terminal device. 110a and 120i communicate with each other through a radio air interface protocol. Certainly, 110a and 120i may alternatively communicate with each other through an interface protocol between the network device and the terminal device. In this case, for 110a, 120i is also a network device. Therefore, in embodiments of this application, the network device and the terminal device may be collectively referred to as communication apparatuses. 110a and 110b in FIG. 1 may be referred to as communication apparatuses with a function of a network device, and 120a to 120j in FIG. 1 may also be referred to as communication apparatuses with a function of a terminal.

As described above, a sensing device may sense a surrounding environment to determine attribute information, for example, location information, of a sensed target. Sensing a location of a terminal device is used as an example. A terminal device in an RRC connected (connected) state may send sensing data (or sensed positioning-related information) to a network device, so that the network device determines a location of the terminal device based on the received sensing data. The RRC connected state may be referred to as a connected state for short. The terminal device establishes an RRC connection to a network, and may perform data transmission. In embodiments of this application, the "connected state" and the "RRC connected state" are a same concept, and the two expressions are interchangeable. A terminal device in an RRC inactive (inactive) state may send sensing data to the network device after switching to an RRC connected state. However, this causes an extra delay, and a location of the terminal device cannot be obtained. The RRC inactive state is also referred to as an inactive state, a non-active state, or the like. In embodiments of this application, a "de-activated state", the "non-active state", a "non-activated state", a "deactivated state", the "inactive state", the "RRC inactive state", an "RRC deactivated state", or the like are a same concept, and the expressions are interchangeable.

To minimize a delay in obtaining a location of a terminal device in an RRC inactive state, an SDT mechanism is proposed for transmitting positioning-related information. For example, a random access procedure supports SDT, and typical small-packet data may be transmitted in a data channel (for example, a physical uplink shared channel (physical uplink shared channel, PUSCH)) as a payload. However, the SDT is controlled by a RAN access stratum (access stratum, AS), and positioning of the terminal device may be triggered by a core network according to a positioning requirement. The following problem is inevitable: The core network triggers the positioning, but the RAN AS has not triggered the SDT. Consequently, it cannot be ensured that the terminal device in the RRC inactive state reports positioning-related information in a timely manner, or the terminal device even cannot report positioning-related information. Even if the RAN AS triggers the SDT, due to a priority between SDT data and other data, the terminal device in the RRC inactive state may also be unable to report positioning-related information in a timely manner, or even cannot report positioning-related information.

In view of this, the solutions in embodiments of this application are provided. In embodiments of this application, a terminal device with a sensing capability may report sensing information (for example, a sensing result or a sensing capability) or the like in a random access procedure or a random sensing reporting procedure. In this way, the terminal device can transmit the sensing information without entering an RRC connected state. In comparison with transmitting the sensing information based on the SDT mechanism, a transmission delay of the sensing information can be reduced, to improve reliability of sensing information transmission.

The solutions provided in embodiments of this application are applicable to a terminal device in an RRC inactive state and a terminal device in an RRC idle state and also applicable to some terminal devices in a low power mode, and have a wider application scope. A specific type of the low power terminal device and the like are not limited in embodiments of this application. For example, the low power terminal device may be UE that is in an RRC connected state but has a low power consumption requirement. For example, the power consumption requirement of the UE is lower than a first threshold. For example, the low power terminal device may be an internet of things terminal, for example, an electronic label. It should be noted that, in embodiments of this application, the terminal device is a device with a sensing capability. Unless otherwise specified, the terminal device may be replaced with a sensing device.

The solutions provided in embodiments of this application are further described below with reference to the accompanying drawings.

For ease of understanding, before the solutions provided in embodiments of this application are described, some terms in embodiments of this application are first described.
(1) A sensing capability is a capability needed by a terminal device to perform a sensing task. The sensing capability may include one or more of the following: a sensing bandwidth capability, a sensing area capability, a sensing method capability, a sensing speed range, a sensing angular resolution, sensing signal strength/quality, a sensing direction, or the like. The sensing bandwidth capability may represent maximum bandwidth supported by the terminal device for sending and/or receiving a sensing signal. The sensing area capability may represent a maximum sensing area supported by the terminal device. The sensing speed range may represent a sensing speed supported by the terminal device. The sensing angular resolution may represent an angular resolution supported by the terminal device. The sensing method capability may represent a sensing method (which is described below) supported by the terminal device. The sensing direction may represent a sensing angle range supported by the terminal device, for example, beams from which the terminal device supports receiving sensing signals. The sensing signal strength/quality may represent received signal strength/quality of the terminal device.
   The foregoing sensing capabilities are merely examples. In an actual application scenario, there may be more or fewer sensing capabilities. For example, the sensing capability may further include a supported sensing service.
(2) A sensing method includes a downlink angle of arrival (downlink angle of arrival, DAOA /DL-AOA) method, a downlink angle of departure (downlink angle of departure, DAOD/DL-AOD) method, a time difference of arrival (time difference of arrival, TDOA) method, a sidelink angle of arrival (sidelink angle of arrival, SL-AOA) method, a sidelink angle of departure (sidelink angle of departure, SL-AOD) method, a round trip time (round trip time, RTT) method, and a multi-cell round trip time (multi-cell round trip time, multi-RTT) method. A DL-AOD is a direction of departure of an electromagnetic wave observed from a network device during downlink transmission of the electromagnetic wave between the network device and a terminal device, and may be used to position the terminal device. In the DL-AOA method, a DL-AOA is a direction of arrival of an electromagnetic wave observed from a terminal device during downlink transmission of the electromagnetic wave between a network device and the terminal device, and may be used to position the terminal device. A TDOA is a transmission time difference between signals sent by a terminal device to two network devices, and may be used to position the terminal device. A to-be-positioned terminal device performs measurement on signals from at least two network devices, to obtain a time difference between the at least two network devices and the to-be-positioned terminal device, and may determine a location of the terminal device by using the time difference. It can be understood that at least two network devices participate in positioning of a terminal device. Based on different measurement objects, there are a downlink time difference of arrival (DL-TDOA) and an uplink time difference of arrival (UL-TDOA). In some embodiments, the DL-TDOA may also be referred to as a UTDOA, and the UL-TDOA may also be referred to as an observed time difference of arrival (observed time difference of arrival, OTDOA). In the multi-RTT method, time of transmission from a terminal device to at least three network devices may be measured, and a location of the terminal device is determined based on a time difference between signals from the terminal device to any two network devices.

In different sensing methods, content that needs to be measured also varies, and a corresponding sensing result/measurement result also varies. The sensing methods are separately described below.

In the DL AoA method or the SL-AOA method, a sensing result includes one or more of the following: an ID of a resource on which a sensing reference signal/sensing signal (sensing reference signal, SERS) is located, signal quality of an SERS (for example, reference signal received power (reference signal received power, RSRP), or RSRP of the SERS on a single path (namely, reference signal received path power, RSRPP)), measurement time, a receive beam index, a transform coefficient of a global coordinate system corresponding to a local coordinate system, line of sight (line of sight propagation, LOS) measurement information, non-line-of-sight (no line of sight propagation, NLOS) measurement information, or the like.

In the DL AoD or SL-AoD method, a sensing result includes one or more of the following: an ID of an SERS resource, RSRP/RSRPP of an SERS, measurement time, a receive beam index, LOS measurement information, NLOS measurement information, or the like.

In the DL TDOA or SL-TDOA method, a sensing result includes one or more of the following: an ID of an SERS resource, a reference signal time difference (reference signal time difference, RSTD), RSRP/RSRPP of an SERS, measurement time, LOS measurement information, NLOS measurement information, or the like.

In the RTT method, a sensing result includes one or more of the following: an ID of an SERS resource, sidelink RSRP/RSRPP, measurement time, a difference between time at which a sensing device sends an SERS and time at which the sensing device receives an SERS, LOS measurement information/NLOS measurement information, a sending timing difference, and a receiving timing difference.

In the multi-RTT method, a sensing result includes one or more of the following: an ID of an SERS resource, downlink RSRP/RSRPP, measurement time, a difference between time at which a sensing device sends an SERS and time at which the sensing device receives an SERS, LOS measurement information/NLOS measurement information, a sending timing difference, and a receiving timing difference.

(3) A random access procedure includes 2-step random access and 4-step random access. The 4-step random access is first described. Four random access messages are used in the 4-step random access, and the four random access messages are a random access message 1 to a random access message 4. The random access message 1 is a random access preamble, and may be referred to as a message 1 (message 1, MSG1) for short. The random access message 2 is a response message for the random access message 1, is also referred to as a random response message, and may be referred to as a message 2 (MSG2) for short. The random access message 3 and the random access message 4 are specific to a contention-based access mechanism, and are used to resolve a contention conflict. Any terminal device may send an MSG1 and an MSG3 to a network device. Correspondingly, the network device responds to the MSG1 by using an MSG2, and responds to the MSG3 by using an MSG4.

Two random access messages are used in the 2-step random access procedure. The two random access messages are a random access message 1 (also referred to as a random access message A, MSGA for short) and a random access message 2 (also referred to as a random access message B, MSGB for short). It can be understood that the random access message 1/random access message A in the 2-step random access procedure is equivalent to the random access message 1 and the random access message 3 in the 4-step random access procedure, and the random access message 2/random access message B in the 2-step random access procedure is equivalent to the random access message 2 and the random access message 4 in the 4-step random access procedure. Any terminal device may send an MSGA to a network device. Correspondingly, the network device responds to the MSGA by using an MSGB.

(4) A random sensing reporting procedure (or referred to as a sensing random reporting procedure) includes a 4-step random sensing reporting procedure and a 2-step random sensing reporting procedure. The 4-step random sensing reporting procedure and the 2-step random sensing reporting procedure are defined relative to each other. The 4-step random sensing reporting procedure is a procedure for reporting sensing information by using four messages, and the 2-step random sensing reporting procedure is a procedure for reporting sensing information by using two messages.

For example, the four messages used in the 4-step random sensing reporting procedure include an MSGA corresponding to step 1, an MSGB corresponding to step 2, an MSGC corresponding to step 3, and an acknowledgement message corresponding to step 4. The MSGA may be used to report a sensing capability. The MSGB is used to respond to the MSGA, and the MSGB may further include a sensing signal. The MSGC may be used to report a sensing result. The acknowledgement message corresponding to step 4 is used to respond to the MSGC. If a random sensing reporting procedure does not include the acknowledgement message corresponding to step 4, the random sensing reporting procedure may be referred to as a 3-step random sensing reporting procedure. The MSGA in the 4-step random sensing reporting procedure may be the MSG1 in the 4-step random access procedure, and correspondingly, the MSGB may be the MSG2 in the 4-step random access procedure. From this perspective, the 4-step random sensing reporting procedure may alternatively mean reporting sensing information by using a message used in the 4-step random access procedure, for example, reporting the sensing information by using a resource associated with the MSG1. Alternatively, in the 4-step random sensing reporting procedure, messages exchanged in the 4-step random access procedure are reused to report sensing information.

The two messages used in the 2-step random sensing reporting procedure are an MSGA corresponding to step 1 and an MSGB corresponding to step 2. The MSGA is used to report a sensing result, and the MSGB is a response message for the MSGA. If the MSGB corresponding to step 2 in the random sensing reporting procedure is not included, the random sensing reporting procedure may be referred to as a 1-step random sensing reporting procedure. The MSGA in the 2-step random sensing reporting procedure may be the MSGA in the 2-step random access procedure, and correspondingly, the MSGB may be the MSGB in the 2-step random access procedure. From this perspective, the 2-step random sensing reporting procedure may alternatively mean reporting sensing information by using a message used in the 2-step random access procedures, for example, reporting the sensing information by using the MSGA. Similarly, in the 2-step random sensing reporting procedure, messages exchanged in the 2-step random access procedure are reused to report sensing information.

It should be noted that reusing a message to report sensing information includes: Content carried in the reused message remains unchanged, or content carried in the reused message may change; or content carried in a channel carrying the reused message remains unchanged or changes. For example, in the 4-step random sensing reporting procedure, the MSG1 in the 4-step random access procedures is reused. In the four random access procedures, the MSG1 is a preamble. In the 4-step random sensing reporting procedure, a terminal device may send the MSG1, a sensing capability, and the like.

Even if sensing information is reported in a random sensing reporting procedure by using a message exchanged in a random access procedure, whether a terminal device accesses a network is not limited. To be specific, random sensing reporting of the terminal device and random network access of the terminal device may be independent of each other, and whether the terminal device accesses the network is determined by a network device, determined by the network and the terminal device through negotiation, or determined by the terminal device. For example, the terminal device may report the sensing information in the random sensing reporting procedure but does not access the network. In this case, the network and the terminal device have no communication data to be transmitted. For another example, the terminal device not only reports the sensing information but also accesses the network in the random sensing reporting procedure. In this case, the network and the terminal device have communication data to be transmitted.

(5) In embodiments of this application, "sensing reporting" indicates sensing information reporting. The sensing reporting and the sensing information reporting are interchangeable. Sensing information includes sensing data (also referred to as a sensing measurement result), bandwidth associated with a measurement result, a sensing capability, and the like. The sensing measurement result and a sensing result are interchangeable. The "associated with" may also be referred to as "mapped to", "related to", or "corresponding to". For example, that a first resource is associated with a preamble may alternatively be replaced with that the first resource corresponds to (or is mapped to, or is related to) the preamble. In embodiments of this application, the first resource may be a data channel or a control channel associated with the preamble, or the first resource may be a preamble resource, or the first resource may be a preamble resource and a data channel or a control channel associated with the preamble. For another example, that bandwidth is associated with a measurement result may also be understood as that corresponding bandwidth is indicated when the measurement result is reported. A "resource pool" may alternatively be replaced with a "resource set" or a "resource group".

All of "when", "provided that", and "if" mean that an apparatus performs corresponding processing in an objective case, but are not intended to limit time. In addition, the terms do not mean that the apparatus needs to perform a determining action during implementation, and do not mean any other limitation either. Unless otherwise specified, "if" and "provided that" are interchangeable, "when" and "in a case that" are interchangeable, and "when" and "if"/"provided that" are interchangeable.

In embodiments of this application, unless otherwise specified, a quantity of a noun indicates "a singular noun or a plural noun", namely, "one or more". "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be in a singular form or a plural form. The character "/" usually indicates an "or" relationship between the associated objects. For example, A/B indicates A or B. "At least one of the following items (pieces)" or a similar expression thereof indicates any combination of the items, including one of the items (pieces) or any combination of a plurality of the items (pieces). For example, at least one of a, b, or c indicates a, b, c, a and b, a and c, b and c, or a, b, and c, where a, b, and c may be in a singular form or a plural form.

Ordinal numbers such as "first" and "second" in embodiments of this application are intended to distinguish between a plurality of objects, but not to limit sizes, content, an order, a time sequence, priorities, importance, or the like of the plurality of objects. For example, a first condition and a second condition indicate two conditions, but do not indicate a difference between the two conditions in content, priorities, importance, or the like. For a technical feature, technical features in the technical feature are distinguished by using "A", "B", "C", "D", and the like, and there is no sequential order or order of size between the technical features described by using "A", "B", "C", and "D". For example, a manner A and a manner B in this specification are merely intended to distinguish between different conjugate processing manners, but do not limit a sequential order, an order of size, a priority, importance, or the like between the manner A and the manner B.

A communication method provided in embodiments of this application is applicable to an integrated sensing and communication system. An example in which the communication method provided in embodiments of this application is applied to the network architecture shown in FIG. 1 is used in the following descriptions. The terminal devices 120a to 120j in FIG. 1 may include a sensing device and a common terminal device, or all of 120a to 120j are sensing devices. Refer to FIG. 1.

The communication method provided in embodiments of this application may be performed by a first communication apparatus and a second communication apparatus. The first communication apparatus may implement a function of a network device, and the second communication apparatus may implement a function of a terminal device. For example, the first communication apparatus may be the network device in FIG. 1, and the second communication apparatus may be the terminal device in FIG. 1. Alternatively, the first communication apparatus may implement a function of a terminal device, and the second communication apparatus may also implement a function of a terminal device. For example, the first communication apparatus may be the terminal device in FIG. 1, and the second communication apparatus may also be the terminal device in FIG. 1.

For ease of description, an example in which embodiments of this application are performed by a network device and a terminal device is used below, but embodiments of this application are not limited to the network device and the terminal device. For example, embodiments of this application may alternatively be performed by more terminal devices. It should be understood that, when more terminal devices are used, all of the more terminal devices perform a same process.

In the communication method (for example, a communication method 200) provided in embodiments of this application, steps performed by a network device may be implemented by a RAN device, or may be implemented by a component (for example, a baseband chip or another module like a processing unit or a processor) in a RAN device. For example, the network device may be the network device in FIG. 1, or may be a chip (system) in the network device in FIG. 1. Steps performed by a terminal device may be implemented by the terminal device, or may be implemented by a component (for example, a module like a chip, a processing unit, or a processor) in the terminal device. The terminal device may be the terminal device shown in FIG. 1, or may be a chip (system) in the terminal device in FIG. 1.

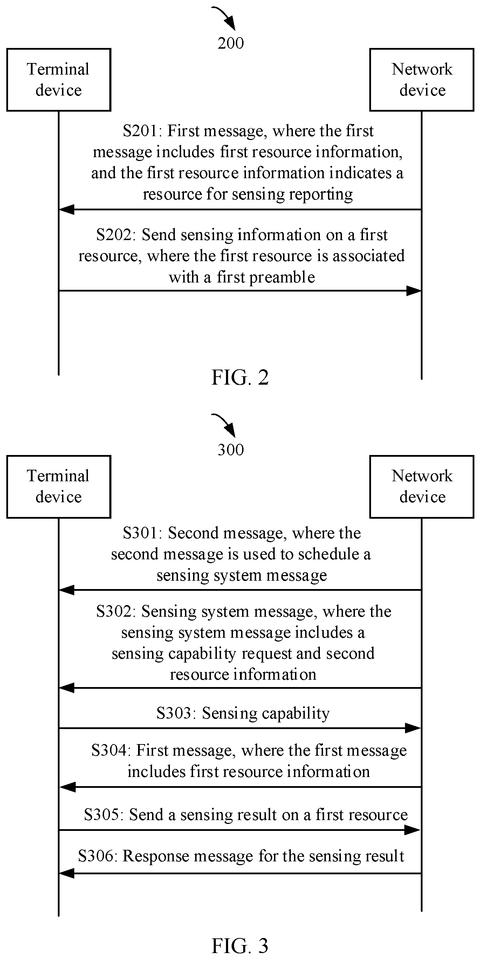

FIG. 2 is a schematic flowchart of the communication method 200 according to an embodiment of this application. In FIG. 2, the method is described from a perspective of interaction between a network device and a terminal device. It should be understood that the communication method 200 may alternatively be implemented by another apparatus, for example, a chip with a communication function or a communication apparatus. As shown in FIG. 2, a process of the communication method 200 includes the following steps.

S201: The network device sends a first message, where the first message includes first resource information, the first resource information indicates a first resource, the first resource is a resource for sensing information reporting, and the first resource is associated with a preamble. Correspondingly, the terminal device receives the first message.

S202: The terminal device sends sensing information on the first resource. Correspondingly, the network device receives the sensing information on the first resource.

The sensing information includes one or more of a sensing measurement result, a sensing capability, bandwidth associated with the sensing measurement result, a preamble, and the like, and certainly, may alternatively include other sensing-related information. The sensing measurement result includes a result obtained by measuring at least one type of sensing signal bandwidth, and is also referred to as a sensing reporting result. A sensing signal is sent by the network device. For example, the network device broadcasts the sensing signal, or the network device may send the sensing signal to one or more terminal devices. The sensing signal may be an SSB, an SRS, a DMRS, or the like.

The network device may configure, for the terminal device, a resource for sensing information reporting. For example, the network device may send the first message, where the first message includes the first resource information, the first resource information indicates the first resource, and the first resource is a resource for sensing information reporting. In this embodiment of this application, the resource for sensing information reporting may be associated with a preamble. For example, the first resource is associated with a first preamble. The preamble may be a random access preamble (preamble) or another possible preamble, provided that the terminal device can report a sensing result in a random access procedure or a sensing random reporting procedure. For example, the preamble may be a preamble dedicated to sensing. For example, the preamble is a random access preamble. The sensing information may be transmitted with the random access preamble as a part of control information, or the sensing information may be transmitted with the random access preamble as a part of data information. Correspondingly, the resource for sensing information reporting may be a data channel or a control channel, for example, a resource used by a PUSCH, where the PUSCH is a data channel transmitted with the preamble.

That the first resource information indicates the first resource includes: The first resource information indicates an association relationship between a plurality of resources and a plurality of preambles, and the plurality of resources include the first resource. One preamble may correspond to one resource, or may correspond to a plurality of resources. For example, the first resource is a data channel or a control channel associated with a preamble, and the first resource information may indicate an association relationship between a plurality of data channels (or control channels) and a plurality of preambles, where one preamble corresponds to one or more data channels (or control channels). The terminal device may alternatively select a preamble (for example, the first preamble) from a configured preamble resource pool, and may determine, based on the association relationship, a resource (for example, the first resource) associated with the first preamble, to send the sensing information on the first resource. Because the sensing information is sent with the preamble, even if the terminal device does not enter an RRC connected state, the sensing information can be reported. This is more applicable to a terminal device in an RRC inactive state, a terminal device in an RRC idle state, a low power terminal device, or the like.

In an implementation, different preambles may be associated with different resources. For example, the first preamble is associated with the first resource, and a second preamble is associated with a second resource. In this way, although terminal devices randomly select preambles from the preamble resource pool, different terminal devices can still report sensing information by using different resources, to reduce resource conflicts and ensure reliable transmission of the sensing information to a maximum extent.

Feedback resources may be configured, to reduce conflicts caused by autonomously selecting feedback resources by UE.

The network device may configure at least one feedback resource pool, or preconfigure at least one feedback resource pool. One feedback resource pool includes at least one preamble and/or at least one data channel (or control channel) resource. Alternatively, at least one group of feedback resources may be (pre)configured, and one group of feedback resources includes at least one preamble and at least one data channel (or control channel) resource. The data channel may be the PUSCH. Because a network may support a plurality of types of sensing signal bandwidth and different terminal devices may have different sensing bandwidth capabilities, one or more feedback resource pools may be correspondingly configured for each type of bandwidth. A terminal device may select a corresponding feedback resource pool based on supported sensing bandwidth, select a feedback resource from the feedback resource pool, and then use a resource associated with the feedback resource as a resource for sensing information reporting. Each terminal device selects a feedback resource from a feedback resource pool corresponding to sensing bandwidth supported by the terminal device, to minimize resource conflicts.

For example, bandwidth of the sensing signal is first bandwidth, and the first bandwidth corresponds to a first feedback resource pool and a second feedback resource pool. It is assumed that a resource actually used by the terminal device to report the sensing information is the first resource. In this case, the first resource is a resource randomly selected from a feedback resource pool that is randomly selected from the first feedback resource pool and the second feedback resource pool. In comparison with a case in which the first resource is a resource randomly selected from only one feedback resource pool, resource conflicts between terminal devices can be reduced.

Optionally, a feedback resource pool corresponding to each type of bandwidth may include a plurality of resources for reporting sensing information, to reduce resource conflicts between terminal devices at same bandwidth. For example, bandwidth of the sensing signal is first bandwidth, and the first bandwidth corresponds to a first feedback resource pool. It is assumed that a resource actually used by the terminal device to report the sensing information is the first resource. In this case, the first resource is a resource randomly selected from the first feedback resource pool. In comparison with a case in which the first bandwidth corresponds to only one first resource, resource conflicts between terminal devices at same bandwidth can be reduced.

Optionally, a correspondence between bandwidth and a feedback resource pool may be (pre)configured, and the first resource is indicated by the first resource information. (Pre)configuring the correspondence between bandwidth and a feedback resource pool further helps the network device determine, based on a reporting resource selected by the terminal device, sensing signal bandwidth corresponding to the sensing information. The terminal device does not need to indicate, by using an additional indication, the sensing signal bandwidth corresponding to the sensing information.

In an example 1, the feedback resource pool is a preamble resource pool. At least one type of bandwidth may correspond to one preamble resource pool, and the first resource information may indicate a correspondence between a preamble and a data channel transmitted with the preamble. The terminal device may randomly select a preamble from a preamble resource pool that matches a bandwidth capability of the terminal device, and use a data channel transmitted with the preamble as the first resource, to transmit the sensing information. It can be understood that different terminal devices may be identified/distinguished by preambles. Similarly, the sensing information carried in the data channel transmitted with the preamble may be further identified/distinguished by the preamble. When a preamble conflict occurs, the terminal device may reselect a preamble at configured rollback time, and retransmit the sensing information carried in the data channel. A multiplexing mode of a resource used by the preamble and the data channel transmitted with the preamble includes one or more of time division multiplexing, frequency division multiplexing, or code division multiplexing.

It should be noted that the data channel herein may be replaced with a control channel. For example, the first resource information indicates a correspondence between a preamble and a control channel transmitted with the preamble. In this case, the terminal device randomly selects a preamble from a preamble resource pool that matches a bandwidth capability of the terminal device, and uses a control channel transmitted with the preamble as the first resource, to transmit the sensing information. When a preamble conflict occurs, the terminal device may reselect a preamble at configured rollback time, and retransmit the sensing information carried in the control channel. A multiplexing mode of a resource used by the preamble and the control channel transmitted with the preamble includes one or more of time division multiplexing, frequency division multiplexing, or code division multiplexing.

In an example 2, the feedback resource pool includes a data channel resource pool or a control channel resource pool. For ease of description, an example in which the feedback resource pool includes the data channel resource pool is used. It should be understood that a data channel below may be replaced with a control channel. In other words, the following example is also applicable to a control channel.

At least one type of bandwidth corresponds to one data channel resource pool, and the first resource information may indicate a resource of a data channel. The terminal device randomly selects a data channel, as the first resource, from a data channel pool that matches a bandwidth capability of the terminal device, to transmit the sensing information. Directly sending the sensing information with the data channel can reduce overheads of sending a preamble.

In an example 3, there are at least two bandwidth configurations, and each type of bandwidth corresponds to one preamble resource pool, or each type of bandwidth corresponds to at least two preamble resource pools. The first resource information indicates a correspondence between bandwidth and a preamble resource pool. The first resource information may indicate a correspondence between a preamble and a data channel (or control channel) transmitted with the preamble. The terminal device randomly selects a preamble from a preamble resource pool that matches a bandwidth capability of the terminal device, and uses a data channel (or control channel) transmitted with the preamble as the first resource, to transmit the sensing information. It can be understood that different terminal devices may be identified or distinguished by preambles. Similarly, the sensing information carried in the data channel (or control channel) transmitted with the preamble may be further identified or distinguished by the preamble. When a preamble conflict occurs, the terminal device may reselect a preamble at configured rollback time, and retransmit a sensing result carried in the data channel (or control channel). A multiplexing mode of a resource used by the preamble and the data channel (or control channel) transmitted with the preamble includes one or more of time division multiplexing, frequency division multiplexing, or code division multiplexing.

In an implementation, the network device sends the first message to the terminal device in response to the sensing capability sent by the terminal device. That the terminal device receives the first message is that the terminal device receives a response to the sensing capability, where the first message is a part of the response to the sensing capability. In this case, a resource used by the network device to carry the sensing capability of the terminal device is a resource configured for the terminal device to report the sensing measurement result.

In an example 4, a response, sent by the network device, to the sensing capability indicates an association relationship between at least one preamble and at least one resource, where one preamble corresponds to one resource. The preamble is a preamble used by the terminal device to report the sensing capability. The network device receives the sensing capability sent by the terminal device, and may determine, based on a resource carrying the sensing capability, a preamble corresponding to the resource, and then determine, based on the preamble, bandwidth corresponding to sensing measurement of the terminal device. The resource indicated by the response may be used by a plurality of terminal devices to report sensing measurement results. In comparison with a case in which a resource for reporting a sensing measurement result is separately indicated for each terminal device, resource overheads can be reduced. In addition, the preamble is related to a bandwidth capability. An association relationship between a preamble and a reporting resource is indicated by the response, so that the terminal device does not need to additionally indicate bandwidth corresponding to a sensing result, to reduce signaling overheads.

Optionally, the sensing information includes the sensing measurement result and the preamble used for reporting the sensing capability. When receiving the sensing information, the network device may determine sensing signal bandwidth whose measurement result is the sensing measurement result. This helps the network device combine, for processing, sensing measurement results that have same bandwidth and that are from different terminal devices, to improve accuracy of a sensing result.

Optionally, the sensing information includes the sensing measurement result and a bandwidth value of a sensing signal corresponding to sensing measurement or an index corresponding to bandwidth. When receiving the sensing information, the network device may determine sensing signal bandwidth whose measurement result is the sensing measurement result. This helps the network device combine, for processing, sensing measurement results that have same bandwidth and that are from different terminal devices, to improve accuracy of a sensing result.

In this embodiment of this application, other information may be further configured in the first message, to meet a sensing requirement. For example, the first message may be further used to configure one or more of the following: a sensing method, a sensing result reporting manner, a transmission parameter of a sensing signal, or a specific condition. The specific condition indicates a terminal device that meets the specific condition to perform sensing reporting. For ease of description, in this embodiment of this application, the specific condition is referred to as a second condition. The following sequentially describes the content configured in the first message.
(1) The sensing method includes the foregoing positioning method, for example, includes a DL-AOA method, a DL-AOD method, a TDOA method, an RTT method, and a multi-RTT method. One or more sensing methods may be configured in the first message. To be specific, the sensing method configured in the first message includes one or more of the DL-AOA method, the DL-AOD method, the TDOA method, and the multi-RTT method. For another example, the sensing method includes a DL-AOA method, a DL-AOD method, a TDOA method, an SL-AOD method, an SL-AOA method, an RTT method, and a multi-RTT method. One or more sensing methods may be configured in the first message. To be specific, the sensing method configured in the first message includes one or more of the DL-AOA method, the DL-AOD method, the TDOA method, the SL-AOD method, the SL-AOA method, the RTT method, and the multi-RTT method.

The sensing method may also be considered as a sensing capability of the terminal device. For example, if the terminal device supports high bandwidth, the terminal device supports a time-based sensing method (for example, the multi-RTT method). In other words, if the terminal device supports a time-based sensing method, the terminal device has a large bandwidth capability. For another example, if the terminal device supports an antenna with a large aperture, the terminal device supports an angle-based sensing method (for example, the DL AoA method or the SL-AOA method). In other words, if the terminal device supports an angle-based sensing method, the terminal device supports an antenna with a large aperture.

In an implementation, the terminal device may select any one of the sensing methods configured by using the first message. This is easy to implement.

In another implementation, the terminal device may select, based on a bandwidth capability of the terminal device, a sensing method from the sensing methods configured by using the first message. For example, the DL-AOA method, the DL-AOD method, the TDOA method, and the multi-RTT method are configured in the first message. When the bandwidth capability of the terminal device is greater than or equal to the first bandwidth, the terminal device may choose to use one or more of the DL AoA method, the DL AoD method, the TDoA method, or the multi-RTT method. On the contrary, if the bandwidth capability of the terminal device is less than the first bandwidth, the terminal device may choose to use the DL AoA method and/or the DL AoD method. Alternatively, when the bandwidth capability of the terminal device is greater than the first bandwidth, the terminal device may choose to use one or more of the DL AoA method, the DL AoD method, the TDoA method, or the multi-RTT method. On the contrary, if the bandwidth capability of the terminal device is less than or equal to the first bandwidth, the terminal device may choose to use the DL AoA method and/or the DL AoD method. The first bandwidth may be (pre)configured. For another example, the SL-AOA method, the SL-AOD method, the TDOA method, and the RTT method are configured in the first message. When the bandwidth capability of the terminal device is greater than or equal to the first bandwidth, the terminal device may choose to use one or more of the SL-AoA method, the SL-AoD method, the TDoA method, or the RTT method. On the contrary, if the bandwidth capability of the terminal device is less than the first bandwidth and an antenna aperture is greater than a specific size, the terminal device may choose to use the SL-AoA method and/or the SL-AoD method. Alternatively, when the bandwidth capability of the terminal device is greater than the first bandwidth, the terminal device may choose to use one or more of the TDoA method or the RTT method. On the contrary, if the bandwidth capability of the terminal device is less than or equal to the first bandwidth and an antenna aperture is greater than a specific size, the terminal device may choose to use the SL-AoA method and/or the SL-AoD method.

The bandwidth capability of the terminal device being greater than or equal to the first bandwidth indicates that the bandwidth capability of the terminal device is strong. In this case, a sensing result obtained based on one or more of the DL AoA method, the DL AoD method, the TDoA method, or the multi-RTT method has a high time resolution. The bandwidth capability of the terminal device being less than the first bandwidth indicates that the bandwidth capability of the terminal device is weak. In this case, a sensing result may be obtained based on the DL AoA method and/or the DL AoD method, to avoid, by using an angular resolution, a low time resolution caused by an insufficient bandwidth capability. Further, when an antenna aperture is less than a specific threshold and the bandwidth capability of the terminal device is greater than the first bandwidth, a sensing result obtained based on one or more of the TDoA method, the RTT method, or the multi-RTT method has a high time resolution. Alternatively, a sensing result obtained based on one or more of the DL AoA method, the DL AoD method, the TDoA method, the SL-AoA method, the SL-AoD method, or the RTT method has a high time resolution and angular resolution. The bandwidth capability of the terminal device being less than the first bandwidth indicates that the bandwidth capability of the terminal device is weak. In this case, a sensing result may be obtained based on the DL AoA method and/or the DL AoD method, or a sensing result may be obtained based on the SL-AoA method and/or the SL-AoD method, to avoid, by using an angular resolution, a low time resolution caused by an insufficient bandwidth capability.

(2) A sensing reporting resource configuration includes the first resource information. For details, refer to the foregoing descriptions of the first resource information. Details are not described herein again.

In addition, in one set of sensing reporting resource configurations, a feedback resource pool/preamble resource pool or a preamble may be configured, or an association relationship between a preamble and a data channel (or control channel) may be configured. For details, refer to the foregoing related descriptions. Details are not described herein again.

(3) The transmission parameter of the sensing signal may be referred to as a sensing parameter for short, and the two expressions are interchangeable.

The sensing parameter may include a subcarrier spacing (subcarrier spacing, SCS), a cyclic prefix (cyclic prefix, CP) length, sending time, bandwidth, a frequency, a sequence, a transmit beam, and the like that are used for the sensing signal. The network device may configure one or more sets of sensing parameters. At least one bandwidth configuration may be configured in each set of sensing parameters. The terminal device may select a set of sensing parameters for use based on operating bandwidth of the terminal device. In this way, terminal devices with different sensing bandwidth capabilities can collaboratively perform sensing, to better meet a sensing requirement. For example, a low bandwidth configuration may be used to support a low-bandwidth terminal device in performing assistance angular sensing measurement. For another example, a high bandwidth configuration may be used by the terminal device to report a sensing result, to provide a sensing result (for example, a sensing delay) with a higher resolution and higher precision.

In different bandwidth configuration, a same sensing parameter may be the same or different. For example, in different bandwidth configurations, SCSs may be the same; or when SCSs are the same, there may be different bandwidth configurations.

It should be noted that the sensing parameters in (3) are merely examples, and the network device may configure more parameters than the sensing parameter mentioned in (3), or may configure fewer parameters than the sensing parameters mentioned in (3). For example, the sensing parameter further includes a modulation and coding scheme (modulation and coding scheme, MCS) and transmit power.

(4) The second condition may be understood as a condition that needs to be met by a terminal device that performs sensing reporting. To be specific, when a terminal device meets the second condition, the terminal device reports a sensing result; or if a terminal device does not meet the second condition, the terminal device does not perform sensing measurement or does not need to report a sensing result even if the terminal device obtains the sensing result. In comparison with performing sensing at a granularity of a single target terminal device, for example, performing positioning on a single target terminal device, in this embodiment of this application, a wider sensing requirement can be met by configuring the second condition. For example, by configuring the second condition, sensing in a specific geographical location area can be implemented, or sensing in a specific angle range can be implemented, so that a plurality of potential target terminal devices participate in collaborative sensing. This can satisfy "plane"-based sensing instead of merely "point"-based sensing obtaining. In addition, through limitation by the second condition, a terminal device that does not meet the condition can be prevented from participating in collaborative sensing. This can reduce potential interference to sensing in a network and interference to a communication service, and can also reduce unnecessary sensing measurement, to reduce resource overheads and reduce energy consumption. A specific implementation of the second condition is not limited in this embodiment of this application. For example, the second condition may include one or more of the following A1 to A9. That the terminal device meets the second condition means that the terminal device meets one or more of A1 to A9, or meets one or a combination of A1 to A9. The terminal device performs sensing reporting only when meeting one or a combination of A1 to A9.

**A1**: Second signal quality threshold. When the second condition includes the second signal quality threshold, a terminal device whose received signal quality is higher than or equal to the second signal quality threshold is indicated to perform sensing reporting. When received signal quality of a terminal device is higher than or equal to the second signal quality threshold, the terminal device may report a sensing result. On the contrary, if received signal quality of a terminal device is lower than the second signal quality threshold, the terminal device does not need to report a sensing result, to reduce resource overheads and reduce energy consumption. The received signal quality may be reference signal received power (reference signal received power, RSRP), or may be RSRP on each signal receiving path (namely, path reference signal received power, RSRPP).

When the second condition is configured in the first message, the first message may include the second signal quality threshold. Alternatively, the first message may include an index of the second signal quality threshold, to minimize resource overheads. A mapping relationship between at least one signal quality threshold and at least one index may be (pre)configured, and the terminal device may determine the second signal quality threshold based on the mapping relationship and the index carried in the first message.

Configuring the second signal quality threshold can limit a quantity of terminal devices participating in sensing measurement, in other words, limit a quantity of terminal devices participating in sensing reporting, to reduce resource conflicts between terminal devices. In addition, a terminal device whose received signal quality is higher than or equal to the second signal quality threshold performs sensing reporting. This can further ensure reliability and precision of sensing reporting.

**A2**: At least one signal quality range. When the second condition includes the at least one signal quality range, a terminal device whose received signal quality is within the at least one signal quality range is indicated to perform sensing reporting. When received signal quality of a terminal device is within a specific range of the at least one signal quality range, the terminal may report a sensing result. On the contrary, if received signal quality of a terminal device is not within any one of the at least one signal quality range, the terminal device does not need to report a sensing result, to reduce resource overheads and reduce energy consumption.

When the second condition is configured in the first message, the first message may include at least one index, where one index corresponds to one signal quality range, to minimize resource overheads. A mapping relationship between at least one signal quality range and at least one index may be (pre)configured, and the terminal device may determine the at least one signal quality range based on the mapping relationship and the at least one index carried in the first message.

Configuring the at least one signal quality range can further limit a quantity of terminal devices participating in sensing reporting, to minimize resource conflicts between terminal devices. In addition, a terminal device whose received signal quality is higher than or equal to a specific signal quality threshold may be further enabled to perform sensing reporting, to ensure reliability and precision of sensing reporting.

**A3**: At least one bandwidth range. When the second condition includes the at least one bandwidth range, a terminal device whose bandwidth capability is within any one of the at least one bandwidth range is indicated to perform sensing reporting. When sensing bandwidth of a terminal device is within a specific bandwidth range of the at least one bandwidth range, the terminal may report a sensing result. On the contrary, if sensing bandwidth of a terminal device is not within any one of the at least one bandwidth range, the terminal device does not need to report a sensing result, to reduce resource overheads and reduce energy consumption.

When the second condition is configured in the first message, the first message may include at least one index, where one index corresponds to one bandwidth range, to minimize resource overheads. A mapping relationship between at least one bandwidth range and at least one index may be (pre)configured, and the terminal device may determine the at least one bandwidth range based on the mapping relationship and the at least one index carried in the first message. For example, the at least one bandwidth range includes {[0, B1], [B1, B2], [B2, B3], [B4, ~]}. Correspondingly, one bandwidth range may be indicated by 2 bits. For example, values of the 2 bits being 00 indicates that the bandwidth range is [0, B1], values of the 2 bits being 01 indicates that the bandwidth range is [B1, B2], values of the 2 bits being 10 indicates that the bandwidth range is [B2, B3], or values of the 2 bits being 11 indicates that the bandwidth range is [B4, ~].

Configuring the at least one bandwidth range can enable terminal devices with different bandwidth capabilities to participate in sensing, to obtain an accurate sensing result.

A4: At least one bandwidth value. When the second condition includes the at least one bandwidth value, a terminal device whose bandwidth capability corresponds to the at least one bandwidth value is indicated to perform sensing reporting. When a sensing bandwidth value of a terminal device corresponds to the at least one bandwidth value, the terminal may report a sensing result. On the contrary, if sensing bandwidth of a terminal device does not correspond to any configured bandwidth value, the terminal device does not need to report a sensing result, to reduce resource overheads and reduce energy consumption.

When the second condition is configured in the first message, the first message may include at least one index, where one index corresponds to one bandwidth value, to minimize resource overheads. A mapping relationship between at least one bandwidth value and at least one index may be (pre)configured, and the terminal device may determine the at least one bandwidth value based on the mapping relationship and the at least one index carried in the first message. For example, the at least one bandwidth value includes {[B1], [B2], [B3], [B4]}. Correspondingly, one bandwidth value may be indicated by 2 bits. For example, values of the 2 bits being 00 indicates that the bandwidth value is [B1], values of the 2 bits being 01 indicates that the bandwidth value is [B2], values of the 2 bits being 10 indicates that the bandwidth value is [B3], or values of the 2 bits being 11 indicates that the bandwidth value is [B4].

Configuring the at least one bandwidth value can enable terminal devices with different bandwidth capabilities to participate in sensing, to obtain an accurate sensing result.

**A5**: Second area information, indicating a second area. The second area may be considered as an area with a sensing requirement or a target area with a sensing requirement. For example, the second area may be a campus, or the second area may be an area within a specific radius range. When the second condition includes the second area information, a terminal device located in the second area is indicated to perform sensing reporting. When a terminal device is located in the second area, the terminal device may report a sensing result. On the contrary, if a terminal device is not in the second area, the terminal device does not need to report a sensing result, to reduce resource overheads and reduce energy consumption.

Configuring the second area information can enable the network device to initiate a sensing request only to an area with a sensing requirement, to reduce potential interference to sensing.

**A6**: Second angular resolution range, indicating a terminal device whose angular resolution is within the second angular resolution range to perform sensing reporting. When the second condition includes the second angular resolution range, a terminal device whose angular resolution is within the second angular resolution range is indicated to perform sensing reporting. When an angular resolution is within the second angular resolution range, the terminal device may report a sensing result, to obtain a high-precision sensing result. On the contrary, if an angular resolution is not within the second angular resolution range, the terminal device does not need to report a sensing result, to reduce resource overheads and reduce energy consumption. When the second condition is configured in the first message, the first message may include the second angular resolution range or an index of the second angular resolution range. A granularity of an angular resolution range may be defined based on sensing precision, to meet actual sensing precision. For example, the second angular resolution is [0.1 degree, 0.5 degree], [0.5 degree, 1 degree], or [1 degree, 2 degrees].

**A7**: Second speed range, indicating a terminal device whose moving speed is within the second speed range to perform sensing reporting. When the second condition includes the second speed range, a terminal device whose moving speed is within the second speed range is indicated to perform sensing reporting. When a moving speed is within the second speed range, the terminal device may report a sensing result. On the contrary, if a moving speed of a terminal device is not within the second speed range, the terminal device does not need to report a sensing result, to reduce resource overheads and reduce energy consumption. When the second condition is configured in the first message, the first message may include the second speed range or an index of the second speed range.

Configuring the second speed range can enable the network device to request sensing only from a terminal device at a specific moving speed. This can reduce sensing result reporting of a terminal device that is not within the second speed range.

**A8**: Second beam range, indicating a terminal device corresponding to a beam that carries the sensing signal and that is within the second beam range to perform sensing reporting. Configuring the second beam range can enable a terminal device to perform sensing within a specific angle range. For example, the terminal device may perform measurement only on a sensing signal corresponding to a beam within the second beam range. If a beam carrying a sensing signal is not within the second beam range, the terminal device does not need to perform sensing measurement, and does not need to report a sensing result, to meet an actual sensing requirement, reduce unnecessary sensing measurement, reduce resource overheads, and reduce energy consumption. When the second condition is configured in the first message, the first message may include the second beam range or an index of the second beam range.

A9: Second sensing method, indicating a terminal that supports the second sensing method to perform sensing reporting. By configuring the second sensing method, a sensing capability of a terminal device that supports a specific sensing method can be requested. In this way, a quantity of terminal devices participating in sensing is limited, to save resources, reduce energy consumption, reduce interference, and implement sensing with the specific sensing method.

As described above, different terminal devices may have different sensing capabilities. To enable information configured by the network device for a terminal device by using the first message to match a sensing capability of the terminal device, the network device may obtain the sensing capability of the terminal device, to determine, based on the obtained sensing capability, content included in the first message.

For example, the network device may broadcast a sensing capability request, where the sensing capability request is used to request to obtain a sensing capability of at least one terminal device. Correspondingly, the terminal device reports the sensing capability in response to the sensing capability request. In an implementation, the sensing capability request and the first message may be carried in one piece of signaling, or the sensing capability request may be carried in the first message, or the first message may further include the sensing capability request. Certainly, the sensing capability request may alternatively be signaling independent of the first message.

In this case, the first message may include second resource information, and a resource indicated by the second resource information is associated with a preamble. A specific implementation of the association between the resource indicated by the second resource information and the preamble is similar to the specific implementation of the association between the resource indicated by the first resource information and the preamble. For details, refer to the foregoing related content of the association between the resource indicated by the first resource information and the preamble. Details are not described herein again.

In a possible implementation, the network device may obtain, according to an actual sensing requirement, a terminal device that meets a specific condition. In this way, a terminal device that does not meet the specific condition may not participate in sensing, to save resources and reduce energy consumption. For ease of description, in this embodiment of this application, a condition that a sensing capability needs to meet is collectively referred to as a first condition. When a terminal device meets the first condition, the terminal device reports a sensing capability in response to the sensing capability request. If a terminal device does not meet the first condition, the terminal device does not need to report a sensing capability even if the terminal device receives the sensing capability request. The first condition may be the same as or different from the second condition. For example, the first condition may be one or more of the conditions in the second condition. Alternatively, the second condition may be reused as the first condition. The network device configuring the second condition further implicitly indicates that a terminal device that meets the second condition is to report a sensing measurement result and a terminal device that does not meet the second condition does not need to report a sensing measurement result. For example, the first condition may include one or more of the following:

**B1**: First signal quality threshold. The first condition including the first signal quality threshold indicates to request to obtain a sensing capability of a terminal device whose received signal quality is higher than the first signal quality threshold. For example, when received signal quality of a terminal device is higher than or equal to the first signal quality threshold, the terminal device may report the received signal quality of the terminal device. On the contrary, if received signal quality of a terminal device is lower than the first signal quality threshold, the terminal device does not need to report the received signal quality of the terminal device, to reduce resource overheads and reduce energy consumption.

Similar to the case in which the second condition is configured, when the first signal quality threshold is configured in the first message, the first message may include the first signal quality threshold or an index of the first signal quality threshold, to minimize resource overheads. A mapping relationship between at least one signal quality threshold and at least one index may be (pre)configured, and the terminal device may determine the first signal quality threshold based on the mapping relationship and the index carried in the first message.

Configuring the first signal quality threshold can limit a quantity of terminal devices participating in sensing measurement, in other words, limit a quantity of terminal devices participating in sensing, to reduce resource conflicts between terminal devices. In addition, a terminal device whose received signal quality is higher than or equal to the first signal quality threshold performs sensing. This can further ensure precision of a sensing result.

It should be noted that the first signal quality threshold in B1 may be the same as the second signal quality threshold in A1. This is equivalent to that the first message includes one signal quality threshold (for example, the first signal quality threshold or the second signal quality threshold). In this case, the signal quality threshold indicates to request to obtain a sensing capability of a terminal device whose received signal quality is higher than the signal quality threshold, and/or indicates a terminal device whose received signal quality is higher than the signal quality threshold to perform sensing reporting.

When the first signal quality threshold is different from the second signal quality threshold and the first message includes the first signal quality threshold and the second signal quality threshold, the first message may further include a first identifier and a second identifier, where the first identifier indicates that the first signal quality threshold is a signal quality threshold for sensing capability reporting, and the second identifier indicates that the second signal quality threshold is a signal quality threshold for sensing result reporting.

**B2**: At least one signal quality range. The first condition including the at least one signal quality range indicates to request to obtain a sensing capability of a terminal device whose received signal quality is within the at least one signal quality range. When received signal quality of a terminal device is within a specific range of the at least one signal quality range, the terminal may report a sensing capability. On the contrary, if received signal quality of a terminal device is not within any one of the at least one signal quality range, the terminal device does not need to report a sensing capability, to reduce resource overheads and reduce energy consumption.

Similar to the case in which the second condition is configured, when the at least one signal quality range is configured in the first message, the first message may include at least one index, where one index corresponds to one signal quality range, to minimize resource overheads. A mapping relationship between at least one signal quality range and at least one index may be (pre)configured, and the terminal device may determine the at least one signal quality range based on the mapping relationship and the at least one index carried in the first message.

Configuring the at least one signal quality range can further limit a quantity of terminal devices participating in sensing, to minimize resource conflicts between terminal devices. In addition, a terminal device whose received signal quality is higher than or equal to a specific signal quality threshold may be further enabled to participate in sensing, to ensure precision of sensing.

It should be noted that the at least one signal quality range in B2 may be the same as the at least one signal quality range in A2. In this case, B2 may indicate to request to obtain a sensing capability of a terminal device whose received signal quality is within the at least one signal quality range, and/or indicate a terminal device whose received signal quality is within the at least one signal quality range to perform sensing reporting.

When the at least one signal quality range in B2 is different from the at least one signal quality range in A2, the first message may further include a first identifier and a second identifier, where the first identifier indicates at least one signal quality range corresponding to sensing capability reporting, and the second identifier indicates at least one signal quality range corresponding to sensing result reporting.

**B3**: At least one bandwidth range. The first condition including the at least one bandwidth range indicates to request to obtain a sensing capability of a terminal device whose bandwidth capability is within the at least one bandwidth range. When sensing bandwidth of a terminal device is within a specific bandwidth range of the at least one bandwidth range, the terminal may report a sensing capability. On the contrary, if sensing bandwidth of a terminal device is not within any one of the at least one bandwidth range, the terminal device does not need to report a sensing capability, to reduce resource overheads and reduce energy consumption. Configuring the at least one bandwidth range can enable terminal devices with different bandwidth capabilities to participate in sensing, to obtain an accurate sensing result.

Similar to the case in which the second condition is configured, when the at least one bandwidth range is configured in the first message, the first message may include at least one index, where one index corresponds to one bandwidth range, to minimize resource overheads. A mapping relationship between at least one bandwidth range and at least one index may be (pre)configured, and the terminal device may determine the at least one bandwidth range based on the mapping relationship and the at least one index carried in the first message.

It should be noted that the at least one bandwidth range in B3 may be the same as the at least one bandwidth range in A3. In this case, B3 may indicate to request to obtain a sensing capability of a terminal device whose bandwidth capability is within the at least one bandwidth range, and/or indicate a terminal device whose bandwidth capability is within the at least one bandwidth range to perform sensing reporting.

When the at least one bandwidth range in B3 is different from the at least one bandwidth range in A3, the first message may further include a first identifier and a second identifier, where the first identifier indicates at least one bandwidth range corresponding to sensing capability reporting, and the second identifier indicates at least one bandwidth range corresponding to sensing result reporting.

**B4**: At least one bandwidth value. The first condition including the at least one bandwidth value indicates to request to obtain a sensing capability of a terminal device whose bandwidth capability is within the at least one bandwidth value. When sensing bandwidth of a terminal device is a specific bandwidth value of the at least one bandwidth value, the terminal may report a sensing capability. On the contrary, if sensing bandwidth of a terminal device is not any one of the at least one bandwidth value, the terminal device does not need to report a sensing capability, to reduce resource overheads and reduce energy consumption. Configuring the at least one bandwidth value can enable terminal devices with different bandwidth capabilities to participate in sensing, to obtain an accurate sensing result.

When the first condition is configured in the first message, the first message may include at least one index, where one index corresponds to one bandwidth value, to minimize resource overheads. Similar to A4, a mapping relationship between at least one bandwidth value and at least one index may be (pre)configured, and the terminal device may determine the at least one bandwidth value based on the mapping relationship and the at least one index carried in the first message.

It should be noted that the at least one bandwidth value in B4 may be the same as the at least one bandwidth value in A4. In this case, B4 may indicate to request to obtain a sensing capability of a terminal device whose bandwidth capability is within the at least one bandwidth value, and/or indicate a terminal device whose bandwidth capability is within the at least one bandwidth value to perform sensing reporting.

When the at least one bandwidth value in B4 is different from the at least one bandwidth value in A4, the first message may further include a first identifier and a second identifier, where the first identifier indicates at least one bandwidth value corresponding to sensing capability reporting, and the second identifier indicates at least one bandwidth value corresponding to sensing result reporting.

**B5**: First area information, indicating a first area. The first area may be considered as an area with a sensing requirement. For example, the first area may be a campus, or the first area may be an area within a specific radius range. The first condition including the first area information indicates to request to obtain a sensing capability of a terminal device located in the first area. When a terminal device is located in the first area, the terminal device may report a sensing capability. On the contrary, if a terminal device is not in the first area, the terminal device does not need to report a sensing capability, to reduce resource overheads and reduce energy consumption. Configuring the first area information can enable the network device to request a sensing capability only from a terminal device located in an area with a sensing requirement.

It should be noted that an area indicated by the first area information in B4 may be the same as an area indicated by the second area information in A4. For example, both the first area information and the second area information indicate the first area. In this case, B4 may indicate to request to obtain a sensing capability of a terminal device located in the first area, and/or indicate a terminal device located in the first area to perform sensing reporting.

When an area indicated by the first area information in B4 is different from an area indicated by the second area information in A4, the first message may further include a first identifier and a second identifier, where the first identifier indicates the first area information corresponding to sensing capability reporting, and the second identifier indicates the second area information corresponding to sensing result reporting.

**B6**: First angular resolution range, indicating to request to obtain a sensing capability of a terminal device whose angular resolution is within the first angular resolution range. When an angular resolution is within the first angular resolution range, the terminal device may report a sensing capability, to obtain a high-precision sensing result. On the contrary, if an angular resolution is not within the first angular resolution range, the terminal device does not need to report a sensing capability, to reduce resource overheads and reduce energy consumption.

Similar to the case in which the second angular resolution range is configured, when the first angular resolution range is configured in the first message, the first message may include the first angular resolution range or an index of the first angular resolution range.

It should be noted that the first angular resolution range in B5 may be the same as the second angular resolution range in A5. In this case, B5 may indicate to request to obtain a sensing capability of a terminal device whose angular resolution is within the first angular resolution range, and/or indicate a terminal device whose angular resolution is within the first angular resolution range to perform sensing reporting.

When the first angular resolution range in B5 is different from the second angular resolution range in A5, the first message may further include a first identifier and a second identifier, where the first identifier indicates the first angular resolution range corresponding to sensing capability reporting, and the second identifier indicates the second angular resolution range corresponding to sensing result reporting.

**B7**: First speed range, indicating to request to obtain a sensing capability of a terminal device whose moving speed is within the first speed range. When a moving speed is within the first speed range, the terminal device may report a sensing capability. On the contrary, if a moving speed of a terminal device is not within the first speed range, the terminal device does not need to report a sensing capability, to reduce resource overheads and reduce energy consumption. The first message may include the first speed range or an index of the first speed range. Configuring the first speed range can enable the network device to request a sensing capability only from a terminal device at a specific moving speed. This can reduce unnecessary sensing capability reporting of a terminal device.

It should be noted that the first speed range in B6 may be the same as the second speed range in A6. In this case, B6 may indicate to request to obtain a sensing capability of a terminal device whose moving speed is within the first speed range, and/or indicate a terminal device whose moving speed is within the first speed range to perform sensing reporting.

When the first speed range in B6 is different from the second speed range in A6, the first message may further include a first identifier and a second identifier, where the first identifier indicates the first speed range corresponding to sensing capability reporting, and the second identifier indicates the second speed range corresponding to sensing result reporting.

**B8**: First beam range, indicating to request to obtain a sensing capability of a terminal device corresponding to a beam that carries the sensing signal and that is within the first beam range. By configuring the first beam range, a sensing capability of a terminal device within a specific angle range can be obtained. If a beam carrying a sensing signal is not within the first beam range, the terminal device does not need to report a sensing capability, to reduce unnecessary reporting, reduce resource overheads, and reduce energy consumption. The first message may include the first beam range or an index of the first beam range.

It should be noted that the first beam range in B7 may be the same as the second speed range in A7. In this case, B7 may indicate to request to obtain a sensing capability of a terminal device corresponding to a beam that carries the sensing signal and that is within the first beam range, and/or indicate a terminal device corresponding to a beam that carries the sensing signal and that is within the first beam range to perform sensing reporting.

When the first beam range in B7 is different from the second beam range in A7, the first message may further include a first identifier and a second identifier, where the first identifier indicates the first beam range corresponding to sensing capability reporting, and the second identifier indicates the second beam range corresponding to sensing result reporting.

**B9**: First sensing method, indicating to request a terminal that supports the first sensing method to perform sensing reporting. By configuring the first sensing method, a terminal device that supports a specific sensing method can be requested to perform sensing reporting. In this way, a quantity of terminal devices participating in sensing is limited, to save resources, reduce energy consumption, reduce interference, and implement sensing with the specific sensing method.

A type of signaling for carrying the first message is not limited in this embodiment of this application. For example, the first message may be carried in one or more of the following: DCI, SCI, or a MAC CE; or the first message is a message dedicated to sensing. The following separately describes implementations of the first message.

**Implementation 1**: The first message is carried in the MAC CE, to improve transmission efficiency.

**Implementation 2**: The first message is carried in the DCI.

The DCI may include level 1 DCI and level 2 DCI. The level 1 DCI and the level 2 DCI each may be used to configure a part of content included in the first message. For example, the level 1 DCI may be used to configure a resource for a channel carrying the level 2 DCI, and a sensing parameter used for sensing signal transmission; and the level 2 DCI may be used to configure one or more of a sensing method/sensing measurement amount, the first resource information, or the second condition.

The level 1 DCI is carried in a PDCCH to schedule transmission of a PDSCH. The level 2 DCI is carried in the PDSCH. In this way, a payload size of the level 1 DCI can be relatively fixed, to reduce a quantity of times of blind detection. The resource for the level 2 DCI is indicated by the level 1 DCI. Therefore, no blind detection needs to be performed, and a part of content included in the first message can be further configured more flexibly.

In the implementation 2, the PDCCH carrying the level 1 DCI may be scrambled by using a first RNTI. The first RNTI may be newly defined. For example, the first RNTI corresponds to sensing. Alternatively, the first RNTI is an RNTI (for example, an SE-RNTI) dedicated to sensing. A CRC of the PDCCH carrying the level 1 DCI is scrambled by using the first RNTI, to distinguish the PDCCH from a PDCCH for another purpose.

**Implementation 3**: The first message is carried in the DCI and the MAC CE.

A part of content included in the first message is carried in the DCI, and another part of content included in the first message is carried in the MAC CE. For example, level 1 DCI may be used to configure a resource for a channel carrying the level 2 DCI, and a sensing parameter; and level 2 DCI may be used to configure one or more of a sensing method/sensing measurement amount, the first resource information, the preamble corresponding to the first resource, a timing advance, transmit power, a modulation and coding scheme, or the second condition. The MAC CE may include one or more of the first resource information, the preamble corresponding to the first resource, a timing advance, transmit power, and a modulation and coding scheme. When the first message indicates a plurality of preambles and a first resource corresponding to each preamble, the first resource information is indicated by the MAC CE or the level 2 DCI, so that respective corresponding first resources can be simultaneously configured for a plurality of terminal devices by using one piece of signaling, to reduce signaling overheads. For example, the MAC CE or the level 2 DCI may carry a plurality of preambles and information about first resources respectively corresponding to the plurality of preambles. In addition, a terminal device may determine, based on a preamble, a first resource for reporting a sensing measurement result. The network device may determine, based on the first resource carrying the sensing measurement result, the preamble associated with the first resource, and then determine, based on the preamble, signal bandwidth corresponding to the sensing measurement result. In this way, the network device can combine sensing measurement results of a plurality of different terminal devices at same bandwidth for processing, to improve accuracy of sensing.

**Implementation 4**: The first message is carried in the SCI.

The SCI may include level 1 SCI and level 2 SCI. The level 1 SCI and the level 2 SCI each may be used to configure a part of content included in the first message. For example, the level 1 SCI may be used to configure a resource for a channel carrying the level 2 SCI, and a sensing parameter used for sensing signal transmission; and the level 2 SCI may be used to configure one or more of a sensing method/sensing measurement amount, the first resource information, or the second condition.

The level 1 SCI is carried in a physical sidelink control channel (physical sidelink control channel, PSCCH) to schedule transmission of a physical sidelink shared channel (physical sidelink shared channel, PSSCH). The level 2 SCI is carried in the PSSCH.

**Implementation 5**: The first message is a message dedicated to sensing. For example, the first message is a system message, a broadcast message, or a multicast message dedicated to sensing. For ease of description, the system message dedicated to sensing is referred to as a sensing system message (SenSIB) in this specification.

In the implementation 5, the network device may further broadcast a second message, where the second message may be used to schedule the first message, so that the terminal device determines how to receive the first message. The second message may include configuration information of the first message. For example, the second message includes information about a first time window and/or beam information.

The first time window indicates the terminal device to detect the first message within the first time window. Alternatively, the information about the first time window indicates that the first message is sent within the first time window, and the terminal device determines, based on the second message, to detect the first message within the first time window. The network device may send the second message as needed. In other words, the network device may send the configuration information of the first message as needed. The information about the first time window may include a start position of the first time window and a length of the first time window; or the information about the first time window may include an end position of the first time window and a length of the first time window; or the information about the first time window includes a start position of the first time window and an end position of the first time window. Optionally, the first time window may be periodic, and a periodicity of the first time window may be (pre)configured.

The beam information may indicate a transmit beam for the first message, or the beam information may indicate at least one beam associated with the first message. For example, if the first message is sent by using a first beam, the beam information may include an index of the first beam. The first beam may be one or more beams. Associating the first message with a specific beam can implement sensing in a specific direction/specific range. In addition, sending the first message on the specific beam can further reduce potential interference to communication or sensing in a network.

In a possible implementation, the second message (a SIB 1) indicates that a specific beam is used to send the sensing system information senSIB. The specific beam may be one or more beams. Typically, the specific beam corresponds to a specific transmit beam of an SSB. Because the second message is sent on a plurality of different beams of corresponding SSB beams, a specific implementation of indicating a beam for the senSIB in the second message may be: Indication information of SIBs 1 sent on different beams indicates senSIBs with a same SSB beam index. The senSIB may be associated with a specific SSB beam direction, and sensing is performed in a specific direction or a specific range according to a sensing requirement request (from a core network, a RAN, or a terminal device). In addition, indication information of SIBs 1 on different beams being the same facilitates combined reception on adjacent beams for the second message.

In a possible implementation, at least one beam for sending/carrying the second message may be considered as a transmit beam for the first message by default. For example, the second message (a SIB 1) being sent on at least one corresponding SSB beam indicates that the first message is also to be sent through the at least one SSB beam. In this manner, without an additional indication by signaling, the terminal device can determine a specific one or more beams on which the first message is to be received. It can be understood that content indicated by SIBs 1 sent on different SSB beams being the same enables the terminal device to combine SIBs 1 on adjacent SSB beams. Optionally, the SIB 1 sent on the at least one SSB beam may serve as a sensing signal.

An overall sensing reporting process varies with a specific implementation of the first message. The following separately describes the solutions provided in embodiments of this application by using Example 1 and Example 2. In Example 1, a network device may request to obtain a sensing capability of a terminal device, and configure, for the terminal device based on the obtained sensing capability, a configuration parameter for sensing, and the terminal device reports a sensing result with a preamble. In Example 2, a network device does not need to obtain a sensing capability of a terminal device, and directly configures, for the terminal device, a configuration parameter for sensing, and the terminal device reports a sensing result with a preamble.

### Example 1

FIG. 3 is a schematic flowchart of a communication method 300 according to an embodiment of this application. In FIG. 3, the method is described from a perspective of interaction between a network device and a terminal device. It should be understood that the communication method 300 may alternatively be implemented by another apparatus, for example, a chip with a communication function or a communication apparatus. As shown in FIG. 3, a process of the communication method 300 includes the following steps.

S301: The network device sends a second message, where the second message is used to schedule a sensing system message.

Correspondingly, the terminal device receives the second message. The second message may be a SIB 1. That the network device sends the second message may be: The network device broadcasts the SIB 1. The second message may be used to schedule a sensing system message (for example, the foregoing SenSIB). As described above, the second message may include information about a first time window and/or beam information. For details, refer to the foregoing related content. Details are not described herein again.

S302: The network device sends a sensing system message, where the sensing system message includes a sensing capability request and second resource information.

Correspondingly, the terminal device receives the sensing system message. After receiving the second message, the terminal device detects the SenSIB within the first time window. If the second message includes the beam information, the terminal device detects the SenSIB within the first time window on at least one beam indicated by the beam information. Optionally, if at least one beam for sending/carrying the SIB 1 is considered as a transmit beam for the SenSIB by default, the terminal device receives the SenSIB on at least one SSB beam corresponding to the SIB 1.

The SenSIB may include the sensing capability request and the second resource information. The second resource information may indicate a resource for the terminal device to report a sensing capability, for example, a second resource. The second resource is associated with a preamble. The SenSIB may further include a first condition, to indicate to request to obtain a sensing capability of a terminal device that meets the first condition. For details about the sensing capability request, the second resource information, and the first condition, refer to the foregoing related content. Details are not described herein again.

S303: The terminal device sends the sensing capability to the network device.

The terminal device receives the SenSIB, and may determine, based on the second resource information, the second resource for reporting the sensing capability, to send the sensing capability on the second resource. Correspondingly, the network device receives the sensing capability on the second resource. For example, the second resource information indicates an association relationship between a plurality of resources and a plurality of preambles. The terminal device may select a preamble (for example, a second preamble) from configured preambles, and may determine, based on the association relationship, the second resource associated with the second preamble, to send the sensing capability on the second resource. The second resource may be a transmission resource for a preamble and a resource of a PUSCH associated with the preamble, or the second resource may be a data channel or a control channel associated with a preamble, where the PUSCH is a data channel transmitted with the preamble. The sensing capability may be transmitted with the preamble as part of control information or data information. A 4-step random access procedure or sensing random reporting procedure is used as an example. When the terminal device sends an MSG1, the sensing capability may be further sent with a data channel (or control channel) associated with the MSG1. In this way, the terminal device can report the sensing capability without entering an RRC connected state.

It can be understood that, if the SenSIB includes the first condition, only a terminal device that meets the first condition can send a sensing capability to the network device. For a specific capability included in the sensing capability, refer to related content of the foregoing descriptions of the terms.

S304: The network device sends a first message.

The first message may be used to configure some information for the terminal device to participate in sensing, for example, one or more of first resource information, the second resource information, a second condition, a sensing parameter, and a sensing method. For details, refer to the foregoing descriptions of the first message. Details are not described herein again. The first message may be an MSG2 in the 4-step random access procedure or an MSGB in a 2-step sensing random reporting procedure.

The first message may alternatively be considered as a response message for the sensing capability. The network device receives the sensing capability from the terminal device, and sends the first message to the terminal device in response to the sensing capability. For the terminal device, the terminal device sends the sensing capability, and receives, from the network device, a response to the sensing capability, where the response includes the first message. In this case, a sensing signal may be a part of the response. In other words, when sending the first message, the network device further sends the sensing signal; or the network device sends the response to the sensing capability, where the response includes the first message and the sensing signal.

Optionally, the first message may alternatively indicate that a previously sent signal (for example, an SSB) is to be used as a sensing signal for sensing measurement reporting. When the sensing signal is an SSB or a synchronization signal, the sensing signal may be used for narrowband-based assistance sensing measurement, for example, providing angular sensing measurement and reporting.

In a possible scenario, before the network device configures the first resource information, the network device configures the second resource information, to indicate a resource for reporting a sensing capability. In this case, the first resource information may indicate a resource for reporting a sensing result, and does not indicate a resource for reporting a sensing capability. Alternatively, in this case, a resource indicated by the first resource information is used to report a sensing result.

S305: The terminal device sends a sensing result on a first resource.

After receiving the first message, the terminal device performs measurement on the received sensing signal to obtain the sensing result. The terminal device determines, based on the first resource information, a resource (for example, the first resource) for reporting the sensing result, and sends the sensing result on the first resource. Correspondingly, the network device receives the sensing result on the first resource.

In the 4-step random access procedure, the sensing result may be carried in an MSG3 or an MSGC.

As described above, if a correspondence between bandwidth and a preamble is (pre)configured or a correspondence between bandwidth and a preamble resource pool is (pre)configured, that the first resource information indicates the first resource further helps the network device determine, based on a reporting resource selected by the terminal device, sensing signal bandwidth corresponding to sensing information. The terminal device does not need to indicate, by using an additional indication, the sensing signal bandwidth corresponding to the sensing information. For example, when sending the sensing result on the first resource, the terminal device may determine, based on a correspondence between a preamble and the first resource and the correspondence between bandwidth and a preamble, a sensing signal whose bandwidth sensing result is the sensing result. In addition, when sending the sensing result, the terminal device may further send a preamble, and may determine, based on the correspondence between bandwidth and a preamble, a sensing signal whose bandwidth sensing result is the sensing result.

If the first message includes a part of the response, sent by the network device, to the sensing capability, and the response indicates an association relationship between at least one preamble and at least one resource, when the terminal device sends the sensing result and performs reporting on a corresponding sensing resource, the network device may determine, based on the resource and the association relationship, a sensing signal whose bandwidth sensing result is the sensing result.

Optionally, when sending the sensing result, the terminal device may further send a preamble, so that the network device determines a sensing signal whose bandwidth sensing result is the sensing result.

Optionally, when sending the sensing result, the terminal device may further indicate bandwidth corresponding to the sensing result. For example, sensing information sent by the terminal device includes the sensing result and bandwidth indication information (for example, a bandwidth index).

Optionally, when sending the sensing result, the terminal device may further send a preamble and bandwidth indication information.

S306: The network device sends a response message for the sensing result to the terminal device.

When receiving the sensing result, the network device may send the response message to the terminal device, to indicate that the sensing result is received.

In the communication method 300, a terminal device with a sensing capability may report sensing information (for example, a sensing result or a sensing capability) or the like in a random access procedure or a random sensing reporting procedure. In this way, the terminal device can transmit the sensing information without entering an RRC connected state. In comparison with transmitting the sensing information based on an SDT mechanism, a transmission delay of the sensing information can be reduced, to improve reliability of sensing information transmission. The method is particularly applicable to a terminal device in an RRC inactive state and a terminal device in an RRC idle state and also applicable to some low power terminal devices, and has a wider application scope. It should be noted that, in the communication method 300, the terminal device may send the sensing result in a random access procedure, that is, may randomly report the sensing result. However, whether the terminal device performs random access is not limited in this embodiment of this application. For example, if a preamble is dedicated to sensing, the network device sends the first message to the terminal device in response to the preamble. The terminal device determines, based on the first resource information included in the first message, to send the sensing result on the first resource, and the network device determines that the sensing task is completed, but the terminal device does not access a network. For another example, a preamble is a random access preamble, and the network device sends the first message to the terminal device in response to the preamble. The terminal device determines, based on the first resource information included in the first message, to send the sensing result on the first resource. In this case, the terminal device may or may not access a network.

### Example 2

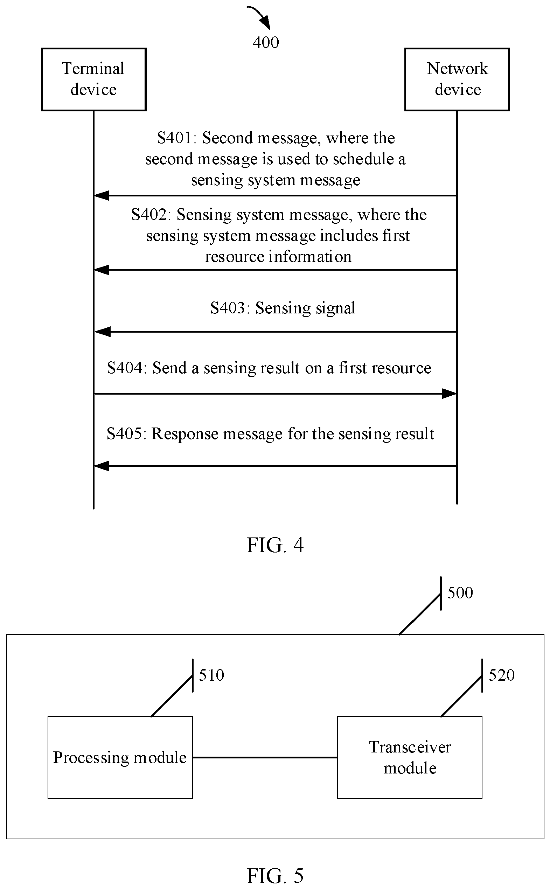

FIG. 4 is a schematic flowchart of a communication method 400 according to an embodiment of this application. In FIG. 4, the method is described from a perspective of interaction between a network device and a terminal device. It should be understood that the communication method 400 may alternatively be implemented by another apparatus, for example, a chip with a communication function or a communication apparatus. As shown in FIG. 4, a process of the communication method 400 includes the following steps.

S401: The network device sends a second message, where the second message is used to schedule a sensing system message.

Correspondingly, the terminal device receives the second message. The second message may be a SIB 1. That the network device sends the second message may be: The network device broadcasts the SIB 1. The second message may be used to schedule a sensing system message (for example, the foregoing SenSIB). As described above, the second message may include information about a first time window and/or beam information. For details, refer to the foregoing related content. Details are not described herein again.

S402: The network device sends a sensing system message, where the sensing system message includes first resource information.

Correspondingly, the terminal device receives the sensing system message. After receiving the second message, the terminal device detects the sensing system message within the first time window. If the second message includes the beam information, the terminal device detects the sensing system message within the first time window on at least one beam indicated by the beam information. Optionally, if at least one beam for sending/carrying the SIB 1 is considered as a transmit beam for the sensing system message by default, the terminal device receives the sensing system message on at least one SSB beam corresponding to the SIB 1.

The sensing system message may be used to configure some information for the terminal device to participate in sensing, for example, one or more of the first resource information, a second condition, a sensing parameter, and a sensing method. It can be understood that the SenSIB herein may be the foregoing first message. For details, refer to the foregoing descriptions of the first message. Details are not described herein again.

S403: The network device sends a sensing signal.

The network device may send sensing signals at a plurality of types of bandwidth, so that terminal devices with different bandwidth capabilities can participate in sensing collaboration. For example, if the second condition is configured and the second condition includes at least one bandwidth range or at least one bandwidth value, all terminal devices that meet the second condition can participate in sensing.

Correspondingly, the terminal device receives the sensing signal, and performs measurement on the received sensing signal to obtain a sensing result. If the network device sends sensing signals at a plurality of types of bandwidth, any terminal device may perform measurement on a sensing signal at bandwidth supported by the terminal device, to obtain a sensing result.

S404: The terminal device sends the sensing result on a first resource.

The terminal device receives the SenSIB, determines, based on the first resource information, a resource (for example, the first resource) for reporting the sensing result, and sends the sensing result on the first resource. Correspondingly, the network device receives the sensing result on the first resource.

As described above, if a correspondence between bandwidth and a preamble or between bandwidth and a preamble resource pool is (pre)configured, the network device determines, based on the first resource used by the terminal device to report the sensing result, sensing signal bandwidth corresponding to the sensing result. The terminal device does not need to indicate, by using an additional indication, the sensing signal bandwidth corresponding to the sensing result. Optionally, when sending the sensing result, the terminal device may further indicate bandwidth corresponding to the sensing result. For example, sensing information sent by the terminal device includes the sensing result and bandwidth indication information (for example, a bandwidth index).

In a 2-step random access procedure or random sensing reporting procedure, the sensing result may be sent with an MSGA. In other words, when sending the MSGA, the terminal device may further send the sensing result with the MSGA.

S405: The network device sends a response message for the sensing result to the terminal device.

When receiving the sensing result, the network device may send the response message to the terminal device, to indicate that the response message is received.

In the communication method 400, a terminal device with a sensing capability may report a sensing result in a random access procedure or a random sensing reporting procedure. In this way, the terminal device can transmit sensing information without entering an RRC connected state. In comparison with transmitting the sensing information based on an SDT mechanism, a transmission delay of the sensing information can be reduced, to improve reliability of sensing information transmission. The method is particularly applicable to a terminal device in an RRC inactive state and a terminal device in an RRC idle state and also applicable to some low power terminal devices, and has a wider application scope. Similar to the communication method 300, in the communication method 400, the terminal device may send the sensing result in a random access procedure, that is, may randomly report the sensing result. However, whether the terminal device performs random access is not limited in this embodiment of this application.

Embodiments provided in embodiments of this application may be separately performed, or may be combined with each other. In the foregoing embodiments provided in this application, the methods provided in embodiments of this application are described from a perspective of interaction between the terminal device and the network device. The steps performed by the terminal device may be implemented by different functional entities included in the terminal device. The steps performed by the network device may be implemented by different functional entities included in the network device. For example, the network device may be of a CU-DU architecture, the CU may generate a first message, and the DU may send the first message. To implement the functions in the methods provided in the foregoing embodiments of this application, the terminal device and the network device may include a hardware structure and/or a software module, to implement the foregoing functions in a form of a hardware structure, a software module, or a combination of a hardware structure and a software module. Whether a specific function of the foregoing functions is performed by the hardware structure, the software module, or the combination of the hardware structure and the software module depends on particular applications and design constraints of the technical solutions.

With reference to the accompanying drawings, the following describes a communication apparatus for implementing the foregoing methods in embodiments of this application. Therefore, all the foregoing content may be used in the following embodiments. Repeated content is not described again.

FIG. 5 is a block diagram of a communication apparatus 500 according to an embodiment of this application. The communication apparatus 500 may be the network device or the terminal device in the foregoing embodiments. For example, the communication apparatus 500 may be the network device or the terminal device in FIG. 1, or the communication apparatus 500 is a chip (system) in the network device or a chip (system) in the terminal device, or the communication apparatus 500 is a software module in the network device or the terminal device. The communication apparatus 500 may correspondingly implement the functions or the steps implemented by the terminal device or the network device in the foregoing method embodiments. The communication apparatus 500 may include a processing module 510 and a transceiver module 520. Optionally, a storage module may be further included. The storage module may be configured to store instructions (code or a program) and/or data. The storage module may be, for example, a memory. The processing module 510 and the transceiver module 520 may be coupled to the storage module. For example, the processing module 510 may read the instructions (the code or the program) and/or the data in the storage module, to implement a corresponding method. When the communication apparatus 500 is a chip in a terminal device, the storage module may be a storage module in the chip, for example, a register or a cache. For example, the storage module may alternatively be a storage module that is in the network device/terminal device and that is located outside the chip, for example, a read-only memory (read-only memory, ROM), another type of static storage device that can store static information and instructions, or a random access memory (random access memory, RAM). The foregoing units may be independently disposed, or all or some of the units may be integrated.

In a possible implementation, the processing module 510 may be a processor or a controller, for example, may be a general-purpose central processing unit (central processing unit, CPU), a general-purpose processor, digital signal processing (digital signal processing, DSP), an application-specific integrated circuit (application-specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. The processor may alternatively be a combination for implementing a computing function, for example, including a combination of one or more microprocessors, or a combination of a DSP and a microprocessor. The transceiver module 520 is a transceiver, an interface circuit, a bus, a pin, or another possible communication interface, and is configured to receive a signal from another apparatus. For example, when the apparatus is implemented in a form of a chip, the transceiver module 520 is an interface circuit used by the chip to receive a signal from another chip or apparatus, or is an interface circuit used by the chip to send a signal to another chip or apparatus.

In some possible implementations, the communication apparatus 500 can correspondingly implement the behavior and the functions of the terminal device in the foregoing method embodiments. The communication apparatus 500 may be a terminal device, or may be a component (for example, a chip or a circuit) used in a terminal device, or may be a chip or a chipset in a terminal device or a part, for performing a related method function, of a chip, or may be a software module that can implement the method performed by the terminal device in the foregoing methods (for example, any one of the communication method 200 to the communication method 400). This is not limited.

For example, the communication apparatus 500 implements the method performed by the terminal device in the embodiment of FIG. 2. The transceiver module 520 may be configured to perform S201 and S202 in the embodiment shown in FIG. 2, and/or configured to support another process of the technology described in this specification. The processing module 510 may be configured to perform another process of the technology described in this specification.

In a possible implementation, the transceiver module 520 is configured to receive a first message, and send sensing information on a first resource based on first resource information. The first message includes the first resource information. The first resource information indicates the first resource. The first resource is a resource for sensing information reporting. The first resource is associated with a preamble.

The sensing information includes one or more of the following: a result obtained by measuring at least one type of sensing signal bandwidth, a sensing capability, sensing measurement bandwidth indication information, or preamble indication information.

In an optional implementation, the transceiver module 520 is further configured to receive a sensing capability request, and report a sensing capability in response to the sensing capability request. The sensing capability request is used to request to obtain a sensing capability of at least one terminal device.

In an optional implementation, the sensing capability request is carried in a sensing system message, and the sensing system message is used for sensing. The sensing system message further includes a first condition and second resource configuration information. The first condition indicates to obtain a sensing capability of at least one terminal device that meets the first condition. The second resource information indicates a resource for reporting the sensing capability.

In an optional implementation, the resource indicated by the second resource information is associated with a preamble.

In an optional implementation, the first condition includes one or more of the following:
a first signal quality threshold, indicating to request to obtain received signal quality of a terminal device whose received signal quality is higher than the first signal quality threshold;
at least one signal quality range, indicating to request to obtain received signal quality of a terminal device whose received signal quality is within the at least one signal quality range;
at least one bandwidth range, indicating to request to obtain a bandwidth capability of a terminal device whose bandwidth capability is within the at least one bandwidth range;
at least one bandwidth value, indicating to request to obtain a bandwidth capability of a terminal device whose bandwidth capability is within the at least one bandwidth value;
first area information, indicating to request to obtain a sensing capability of a terminal device located in a first area;
a first angular resolution range, indicating to request to obtain a sensing capability of a terminal device whose angular resolution is within the first angular resolution range;
a first speed range, indicating to request to obtain a sensing capability of a terminal device within the first speed range;
a first beam range, indicating to request to obtain a sensing capability of a terminal device corresponding to a beam that carries the sensing signal and that is within the first beam range; or
a first sensing method, indicating to request to obtain a sensing capability of a terminal device that supports the first sensing method.

In an optional implementation, the first message is further used to configure one or more of the following: a transmission parameter of a sensing signal, a sensing method, a sensing result reporting manner, or a second condition, where the second condition indicates a terminal device that meets the second condition to perform sensing reporting.

In an optional implementation, the second condition includes one or more of the following:
a second signal quality threshold, indicating a terminal device whose received signal quality is higher than the second signal quality threshold to perform sensing reporting;
at least one signal quality range, indicating a terminal device whose received signal quality is within the at least one signal quality range to perform sensing reporting;
at least one bandwidth range, indicating a terminal device whose bandwidth capability is within the at least one bandwidth range to perform sensing reporting;
at least one bandwidth value, indicating a terminal device whose bandwidth capability is the at least one bandwidth value to perform sensing reporting;
second area information, indicating a terminal device located in a second area to perform sensing reporting;
a second angular resolution range, indicating a terminal device whose angular resolution is within the first angular resolution range to perform sensing reporting;
a second speed range, indicating a terminal device within the first speed range to perform sensing reporting;
a second beam range, indicating a terminal device corresponding to a beam that carries the sensing signal and that is within the first beam range to perform sensing reporting; or
a second sensing method, indicating a terminal device that supports the second sensing method to perform sensing reporting.

In an optional implementation, a sensing parameter includes at least one bandwidth configuration, the at least one bandwidth configuration corresponds to at least one resource pool, the first resource is selected from at least one resource pool corresponding to first bandwidth, and the first bandwidth is bandwidth of the sensing signal.

In an optional implementation, the first message is carried in one or more of DCI, an RRC message, or a MAC CE. The DCI includes level 1 DCI and level 2 DCI. The level 1 DCI is used to configure the transmission parameter of the sensing signal and a resource for a channel carrying the level 2 DCI. The level 2 DCI is used to configure one or more of the sensing method, the first resource information, the preamble corresponding to the first resource, a timing advance, transmit power, a modulation and coding scheme, or the second condition. The MAC CE includes one or more of the first resource information, the preamble corresponding to the first resource, a timing advance, transmit power, and a modulation and coding scheme.

In an optional implementation, a PDCCH carrying the level 1 DCI is scrambled by using a first RNTI, and the first RNTI corresponds to sensing.

In an optional implementation, the first message is carried in one or more of DCI, SCI, a MAC CE, or an RRC message. The SCI includes level 1 SCI and level 2 SCI. The level 1 SCI is used to configure the transmission parameter of the sensing signal and a resource for a channel carrying the level 2 DCI. The level 2 SCI is used to configure one or more of the sensing method, the first resource information, the preamble corresponding to the first resource, a timing advance, transmit power, a modulation and coding scheme, or the second condition. The MAC CE includes one or more of the first resource information, the preamble corresponding to the first resource, a timing advance, transmit power, a modulation and coding scheme, or the second condition.

In an optional implementation, the communication apparatus 500 is a first terminal device, and the first terminal device meets one or more of the following:
being in a radio resource control RRC inactive state; being in an RRC idle state; being in an RRC connected state and having a power consumption requirement lower than a first threshold; being in a low power state; or being configured to be in a low power mode.

In an optional implementation, the sensing method includes one or more of a DL AoA method, a DL AoD method, a TDoA method, or a multi-RTT method.

In an optional implementation, the sensing method includes one or more of an SL AoA method, an SL AoD method, a TDOA method, or an RTT method.

In an optional implementation, when a bandwidth capability of the communication apparatus 500 is greater than or equal to the first bandwidth, a sensing method used by the communication apparatus 500 is one or more of the DL AoA method, the DL AoD method, the TDoA method, or the multi-RTT; or when a bandwidth capability of the communication apparatus 500 is less than the first bandwidth, a sensing method used by the communication apparatus 500 is the DL AoA method and/or the DL AoD method.

In an optional implementation, when a bandwidth capability of the communication apparatus 500 is greater than or equal to the first bandwidth, a sensing method used by the communication apparatus 500 is one or more of the SL AoA method, the SL AoD method, the TDoA method, or the RTT method, or a sensing method used by the communication apparatus 500 is the TDoA method and/or the RTT method; or when a bandwidth capability of the communication apparatus 500 is less than the first bandwidth, a sensing method used by the communication apparatus 500 is the SL AoA method and/or the SL AoD method.

In an optional implementation, the first message is a sensing system message, and the sensing system message is used for sensing.

In an optional implementation, the transceiver module 520 is specifically configured to receive a response to the sensing capability, where the response includes the first message.

In an optional implementation, the sensing signal is a part of the response.

In an optional implementation, before receiving the first message, the transceiver module 520 is further configured to receive a second message, where the second message is used to schedule the first message, and the second message includes information about a first time window and/or beam information. The first time window indicates to detect the first message within the first time window. The beam information indicates a transmit beam for the first message.

In an optional implementation, the transmit beam for the first message is at least one beam that carries the second message.

In some possible implementations, the communication apparatus 500 can correspondingly implement the behavior and the functions of the network device in the foregoing method embodiments. The communication apparatus 500 may be a network device, or may be a component (for example, a chip or a circuit) used in a network device, or may be a chip or a chipset in a network device or a part, for performing a related method function, of a chip, or may be a software module that can implement the method performed by the network device in the foregoing methods (for example, any one of the communication method 200 to the communication method 400). This is not limited.

For example, the communication apparatus 500 implements the method performed by the network device in the embodiment of FIG. 2. The transceiver module 520 may be configured to perform S201 and S202 in the embodiment shown in FIG. 2, and/or configured to support another process of the technology described in this specification. The processing module 510 may be configured to perform another process of the technology described in this specification.

In a possible implementation, the transceiver module 520 is configured to send a first message, and receive sensing information on a first resource. The first message includes first resource information. The first resource information indicates the first resource. The first resource is a resource for sensing information reporting. The first resource is associated with a preamble. The sensing information includes one or more of the following: a result obtained by measuring at least one type of sensing signal bandwidth, a sensing capability, sensing measurement bandwidth indication information, or preamble indication information.

In an optional implementation, the transceiver module 520 is further configured to send a sensing capability request, and receive a sensing capability of a first terminal device in response to the sensing capability request. The sensing capability request is used to request to obtain a sensing capability of at least one terminal device.

In an optional implementation, the sensing capability request is carried in a sensing system message, and the sensing system message is used for sensing. The sensing system message further includes a first condition and second resource configuration information. The first condition indicates to obtain a sensing capability of at least one terminal device that meets the first condition. The second resource information indicates a resource for reporting the sensing capability.

In an optional implementation, the resource indicated by the second resource information is associated with a preamble.

In an optional implementation, the first condition includes one or more of the following:
a first signal quality threshold, indicating to request to obtain received signal quality of a terminal device whose received signal quality is higher than the first signal quality threshold;
at least one bandwidth value, indicating to request to obtain a bandwidth capability of a terminal device whose bandwidth capability is within the at least one bandwidth value;
first area information, indicating to request to obtain a sensing capability of a terminal device located in a first area;
a first angular resolution range, indicating to request to obtain a sensing capability of a terminal device whose angular resolution is within the first angular resolution range;
a first speed range, indicating to request to obtain a sensing capability of a terminal device within the first speed range;
a first beam range, indicating to request to obtain a sensing capability of a terminal device corresponding to a beam that carries the sensing signal and that is within the first beam range; or
a first sensing method, indicating to request to obtain a sensing capability of a terminal device that supports the first sensing method.

In an optional implementation, the first message is further used to configure one or more of the following: a transmission parameter of a sensing signal, a sensing method, a sensing result reporting manner, or a second condition, where the second condition indicates a terminal device that meets the second condition to perform sensing reporting.

In an optional implementation, the second condition includes one or more of the following:
a second signal quality threshold, indicating a terminal device whose received signal quality is higher than the second signal quality threshold to perform sensing reporting;
at least one signal quality range, indicating a terminal device whose received signal quality is within the at least one signal quality range to perform sensing reporting;
at least one bandwidth range, indicating a terminal device whose bandwidth capability is within the at least one bandwidth range to perform sensing reporting;
at least one bandwidth value, indicating a terminal device whose bandwidth capability is the at least one bandwidth value to perform sensing reporting;
second area information, indicating a terminal device located in a second area to perform sensing reporting;
a second angular resolution range, indicating a terminal device whose angular resolution is within the first angular resolution range to perform sensing reporting;
a second speed range, indicating a terminal device within the first speed range to perform sensing reporting;
a second beam range, indicating a terminal device corresponding to a beam that carries the sensing signal and that is within the first beam range to perform sensing reporting; or
a second sensing method, indicating a terminal device that supports the second sensing method to perform sensing reporting.

In an optional implementation, a sensing parameter includes at least one bandwidth configuration, the at least one bandwidth configuration corresponds to at least one resource pool, the first resource is selected from at least one resource pool corresponding to first bandwidth, and the first bandwidth is bandwidth of the sensing signal.

In an optional implementation, the first message is carried in one or more of DCI, an RRC message, or a MAC CE. The DCI includes level 1 DCI and level 2 DCI. The level 1 DCI is used to configure the transmission parameter of the sensing signal and a resource for a channel carrying the level 2 DCI. The level 2 DCI is used to configure one or more of the sensing method, the first resource information, the preamble corresponding to the first resource, a timing advance, transmit power, a modulation and coding scheme, or the second condition. The MAC CE includes one or more of the first resource information, the preamble corresponding to the first resource, a timing advance, transmit power, and a modulation and coding scheme.

In an optional implementation, a PDCCH carrying the level 1 DCI is scrambled by using a first RNTI, and the first RNTI corresponds to sensing.

In an optional implementation, the first message is carried in one or more of DCI, sidelink control information (sidelink control information, SCI), a MAC CE, or an RRC message. The SCI includes level 1 SCI and level 2 SCI. The level 1 SCI is used to configure the transmission parameter of the sensing signal and a resource for a channel carrying the level 2 DCI. The level 2 SCI is used to configure one or more of the sensing method, the first resource information, the preamble corresponding to the first resource, a timing advance, transmit power, a modulation and coding scheme, or the second condition. The MAC CE includes one or more of the first resource information, the preamble corresponding to the first resource, a timing advance, transmit power, a modulation and coding scheme, or the second condition.

In an optional implementation, the sensing method includes one or more of a DL AoA method, a DL AoD method, a TDoA method, or multi-RTT.

In an optional implementation, the sensing method includes one or more of an SL AoA method, an SL AoD method, a TDoA method, or RTT.

In an optional implementation, when a bandwidth capability of the communication apparatus 500 is greater than or equal to the first bandwidth, a sensing method used by the communication apparatus 500 is one or more of the DL AoA method, the DL AoD method, the TDoA method, or the multi-RTT; or when a bandwidth capability of the communication apparatus 500 is less than the first bandwidth, a sensing method used by the communication apparatus 500 is the DL AoA method and/or the DL AoD method.

In an optional implementation, when a bandwidth capability of the communication apparatus 500 is greater than or equal to the first bandwidth, a sensing method used by the communication apparatus 500 is one or more of the SL AoA method, the SL AoD method, the TDoA method, or the RTT method, or a sensing method used by the communication apparatus 500 is the TDoA method and/or the RTT method; or when a bandwidth capability of the communication apparatus 500 is less than the first bandwidth, a sensing method used by the communication apparatus 500 is the SL AoA method and/or the SL AoD method.

In an optional implementation, the first message is a sensing system message, and the sensing system message is used for sensing.

In an optional implementation, the transceiver module 520 is specifically configured to send a response to the sensing capability, where the response includes the first message.

In an optional implementation, the sensing signal is a part of the response.

In an optional implementation, before sending the first message, the transceiver module 520 is further configured to send a second message, where the second message is used to schedule the first message, and the second message includes information about a first time window and/or beam information. The first time window indicates to detect the first message within the first time window. The beam information indicates a transmit beam for the first message.

In an optional implementation, the transmit beam for the first message is at least one beam that carries the second message.

When the communication apparatus 500 is a chip-type apparatus or a circuit, the transceiver module may be an input/output circuit and/or a communication interface, and the processing module is an integrated processor, a microprocessor, or an integrated circuit.

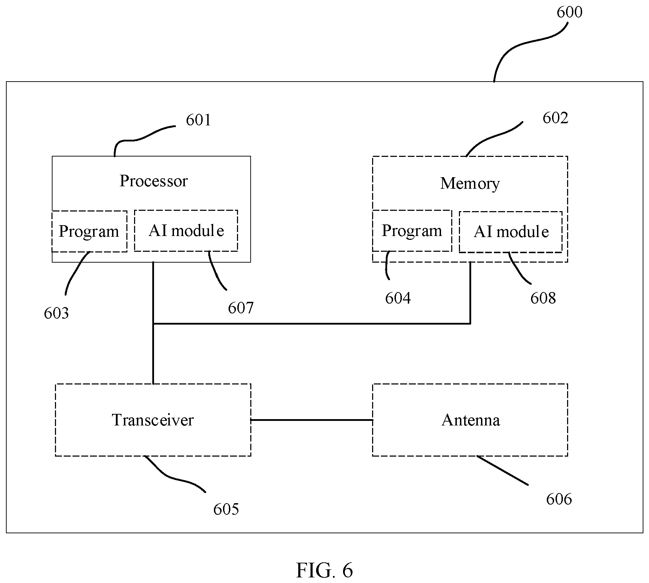

FIG. 6 is a block diagram of a communication apparatus 600 according to an embodiment of this application. The communication apparatus 600 may be the network device or the terminal device in the foregoing embodiments. For example, the communication apparatus 600 may be the network device or the terminal device in FIG. 1, or the communication apparatus 600 is a chip (system) in the network device or the terminal device. In this embodiment of this application, the chip system may include a chip, or may include a chip and another discrete component. For a specific function, refer to the descriptions in the foregoing method embodiments.

The communication apparatus 600 includes one or more processors 601, configured to implement or support the communication apparatus 600 in implementing the functions of the terminal device or the network device in the methods provided in embodiments of this application. For details, refer to the detailed descriptions in the method examples. Details are not described herein again. The processor 601 may also be referred to as a processing unit or a processing module, and may implement a specific control function. The processor 601 may be a general-purpose processor, a dedicated processor, or the like. For example, the processor 601 includes a baseband processor, a central processing unit, an application processor, a modem processor, a graphics processing unit, an image signal processor, a digital signal processor, a video codec processor, a controller, a memory, and/or a neural network processing unit. The baseband processor may be configured to process a communication protocol and communication data. The central processing unit may be configured to control the communication apparatus 600 (for example, a network apparatus or a terminal apparatus), execute a software program, and/or process data. Different processors may be independent components, or may be integrated into one or more processors, for example, integrated into one or more application-specific integrated circuits.

In a design, the processor 601 may include a program 603 (which may sometimes also be referred to as code or instructions). The program 603 may be run on the processor 601, to enable the communication apparatus 600 to perform the methods described in the foregoing embodiments. In another possible design, the communication apparatus 600 includes a circuit (not shown in FIG. 6), and the circuit is configured to implement the functions of the network device or the terminal device in the foregoing embodiments.

In a design, the communication apparatus 600 may include one or more memories 602, and a program 604 (which may sometimes also be referred to as code or instructions) is stored in the memory 602. The program 604 may be run on the processor 601, to enable the communication apparatus 600 to perform the methods described in the foregoing method embodiments, for example, a process shown in one or more of FIG. 2 to FIG. 5.

In a design, the processor 601 and/or the memory 602 may include an artificial intelligence (artificial intelligence, AI) module 607 and an AI module 608. The AI module is configured to implement an AI-related function. The AI module may be implemented by using software, hardware, or a combination of software and hardware. For example, the AI module may include a RAN intelligent controller (RAN intelligent controller, RIC) module. For example, the AI module may be a near-real-time RIC or a non-real-time RIC.

In a possible design, the processor 601 and/or the memory 602 may further store data. The processor and the memory may be separately disposed, or may be integrated together.

In a possible design, the communication apparatus 600 may further include a transceiver 605 and/or an antenna 606. The processor 601 may sometimes also be referred to as a processing unit, and controls the communication apparatus 600. The transceiver 605 may sometimes also be referred to as a transceiver unit, a transceiver device, a transceiver circuit, a transceiver, or the like, and is configured to implement a transceiver function of the communication apparatus through the antenna 606.

In a possible design, the communication apparatus 600 may further include one or more of the following components: a wireless communication module, an audio module, an interface for external memory, an internal memory, a universal serial bus (universal serial bus, USB) interface, a power management module, an antenna, a speaker, a microphone, an input/output module, a sensor module, a motor, a camera, a display, or the like. It can be understood that, in some embodiments, the communication apparatus 600 may include more or fewer components, or some components are integrated, or some components are split. The components may be implemented by using hardware, software, or a combination of software and hardware.

The communication apparatus in the foregoing embodiments may be a terminal device (or a network device), or may be a circuit, or may be a chip used in a terminal device (or a network device), another combined device or component that has a function of the terminal device (or the network device), or the like. When the communication apparatus is a terminal device (or a network device), the transceiver module may be a transceiver, and may include an antenna, a radio frequency circuit, and the like, and the processing module may be a processor, for example, a CPU. When the communication apparatus is a component that has a function of the terminal device (or the network device), the transceiver module may be a radio frequency unit, and the processing module may be a processor. When the communication apparatus is a chip system, the communication apparatus may be an FPGA, a dedicated ASIC, a system-on-a-chip (system-on-a-chip, SoC), a CPU, a network processor (network processor, NP), a DSP, a microcontroller unit (microcontroller unit, MCU), a programmable controller device (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (the code instructions are stored in the memory, and may be directly read from the memory, or may be read from the memory through another device) and transmit the code instructions to the processor. The processor may be configured to run the code instructions to perform the methods in the foregoing method embodiments. For another example, the interface circuit may alternatively be a signal transmission interface circuit between a communication processor and a transceiver device.

An embodiment of this application further provides a communication system. Specifically, the communication system includes a network device and a terminal device. For example, the communication system includes a terminal device and a network device for implementing related functions in one or more of FIG. 2 to FIG. 4. For details, refer to related descriptions in the foregoing method embodiments. Details are not described herein again.

An embodiment of this application further provides a computer-readable storage medium, including instructions. When the instructions are run on a computer, the computer is enabled to perform the method performed by the terminal device or the network device in FIG. 2 to FIG. 4.

An embodiment of this application further provides a computer program product, including instructions. When the instructions are run on a computer, the computer is enabled to perform the method performed by the terminal device or the network device in FIG. 2 to FIG. 4.

An embodiment of this application provides a chip system. The chip system includes a processor and may further include a memory, and is configured to implement the functions of the terminal apparatus or the network apparatus in the foregoing methods. The chip system may include a chip, or may include a chip and another discrete component.

To implement the functions of the communication apparatus in FIG. 5 and FIG. 6, an embodiment of this application further provides a chip, including a processor, configured to support the communication apparatus in implementing the functions of the terminal device or the network device in the foregoing method embodiments. In a possible design, the chip is connected to a memory, or the chip includes a memory. The memory is configured to store a computer program or instructions and data that are necessary for the communication apparatus.

It should be understood that, in embodiments of this application, sequence numbers of the foregoing processes do not mean an execution sequence. An execution sequence of the processes should be determined based on functions and internal logic of the processes, and should not be construed as any limitation on implementation processes of embodiments of this application.

A person of ordinary skill in the art may be aware that the illustrative logical blocks (illustrative logical block) and steps (step) described with reference to embodiments disclosed in this specification can be implemented by electronic hardware, computer software, or a combination of computer software and electronic hardware. Whether the functions are performed by hardware or software depends on particular applications and design constraints of the technical solutions. A person skilled in the art may use different methods to implement the described functions for each particular application. However, it should not be considered that the implementation goes beyond the scope of this application.

It can be clearly understood by a person skilled in the art that, for ease and brevity of description, for detailed working processes of the foregoing systems, apparatuses, and units, reference may be made to corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into the units is merely logical function division. During actual implementation, another division manner may be used. For example, a plurality of units or components may be combined or integrated into another system, or some features may be ignored or not performed. In addition, the shown or discussed mutual couplings, direct couplings, or communication connections may be implemented through some interfaces. The indirect couplings or communication connections between the apparatuses or units may be implemented in an electrical form, a mechanical form, or other forms.

The units described as separate components may or may not be physically separated, and components shown as units may or may not be physical units, to be specific, may be located in one place, or may be distributed on a plurality of network units. Some or all of the units may be selected according to actual requirements to achieve the objectives of the solutions of embodiments.

When the functions are implemented in a form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some of the steps of the methods in embodiments of this application. The storage medium includes any medium that can store program code, for example, a USB flash drive, a removable hard disk drive, a ROM, a RAM, a magnetic disk, or a compact disc.

Clearly, a person skilled in the art can make various modifications and variations to this application without departing from the scope of this application. This application is intended to cover these modifications and variations of this application provided that they fall within the scope of the claims of this application and their equivalent technologies.

## Claims

1. A communication method, wherein the method comprises:
receiving a first message, wherein the first message comprises first resource information, the first resource information indicates a first resource, and the first resource is a resource for sensing information reporting; and
sending sensing information on the first resource based on the resource configuration information, wherein the first resource is associated with a preamble.

2. The method according to claim 1, wherein the sensing information comprises one or more of the following:
a result obtained by measuring at least one type of sensing signal bandwidth;
a sensing capability;
sensing measurement bandwidth indication information; or
preamble indication information.

3. The method according to claim 1 or 2, wherein the method further comprises:
receiving a sensing capability request, wherein the sensing capability request is used to request to obtain a sensing capability of at least one terminal device; and
reporting the sensing capability in response to the sensing capability request.

4. The method according to claim 3, wherein the sensing capability request is carried in a sensing system message, the sensing system message is used for sensing, the sensing system message further comprises a first condition and second resource information, the first condition indicates to obtain a sensing capability of at least one terminal device that meets the first condition, and the second resource information indicates a resource for reporting the sensing capability.

5. The method according to claim 4, wherein the resource indicated by the second resource information is associated with a preamble.

6. The method according to claim 4 or 5, wherein the first condition comprises one or more of the following:
a first signal quality threshold, indicating to request to obtain received signal quality of a terminal device whose received signal quality is higher than the first signal quality threshold;
at least one signal quality range, indicating to request to obtain received signal quality of a terminal device whose received signal quality is within the at least one signal quality range;
at least one bandwidth range, indicating to request to obtain a bandwidth capability of a terminal device whose bandwidth capability is within the at least one bandwidth range;
at least one bandwidth value, indicating to request to obtain a bandwidth capability of a terminal device whose bandwidth capability is the at least one bandwidth value;
first area information, indicating to request to obtain a sensing capability of a terminal device located in a first area;
a first angular resolution range, indicating to request to obtain a sensing capability of a terminal device whose angular resolution is within the first angular resolution range;
a first speed range, indicating to request to obtain a sensing capability of a terminal device within the first speed range; or
a first beam range, indicating to request to obtain a sensing capability of a terminal device corresponding to a beam that carries the sensing signal and that is within the first beam range.

7. The method according to claim 1, wherein the first message is further used to configure one or more of the following:
a transmission parameter of a sensing signal, a sensing method, a sensing result reporting manner, or a second condition, wherein the second condition indicates a terminal device that meets the second condition to perform sensing reporting.

8. The method according to claim 7, wherein the sensing signal comprises a synchronization signal and physical broadcast channel block SSB.

9. The method according to claim 7 or 8, wherein the second condition comprises one or more of the following:
a second signal quality threshold, indicating a terminal device whose received signal quality is higher than the second signal quality threshold to perform sensing reporting;
at least one signal quality range, indicating a terminal device whose received signal quality is within the at least one signal quality range to perform sensing reporting;
at least one bandwidth range, indicating a terminal device whose bandwidth capability is within the at least one bandwidth range to perform sensing reporting;
at least one bandwidth value, indicating a terminal device whose bandwidth capability corresponds to the at least one bandwidth value to perform sensing reporting;
second area information, indicating a terminal device located in the second area to perform sensing reporting;
a second angular resolution range, indicating a terminal device whose angular resolution is within the second angular resolution range to perform sensing reporting;
a second speed range, indicating a terminal device whose moving speed is within the second speed range to perform sensing reporting; or
a second beam range, indicating a terminal device corresponding to a beam that carries the sensing signal and that is within the second beam range to perform sensing reporting.

10. The method according to claim 9, wherein the sensing parameter comprises at least one bandwidth configuration, the at least one bandwidth configuration corresponds to at least one resource pool, the preamble associated with the first resource is selected from at least one resource pool corresponding to first bandwidth, and the first bandwidth is bandwidth of the sensing signal.

11. The method according to any one of claims 1 to 10, wherein the first message is carried in one or more of downlink control information DCI, sidelink control information SCI, a radio resource control RRC message, or a media access control MAC control element CE, wherein
the DCI comprises level 1 DCI and level 2 DCI, the level 1 DCI is used to configure the transmission parameter of the sensing signal and a resource for a channel carrying the level 2 DCI, and the level 2 DCI is used to configure one or more of the sensing method, the first resource information, the preamble associated with the first resource, or the second condition;
the SCI comprises level 1 SCI and level 2 SCI, the level 1 SCI is used to configure the transmission parameter of the sensing signal and a resource for a channel carrying the level 2 SCI, and the level 2 SCI is used to configure one or more of the sensing method, the first resource information, the preamble associated with the first resource, or the second condition; and
the MAC CE comprises the first resource information and/or the preamble associated with the first resource.

12. The method according to claim 11, wherein a physical downlink control channel PDCCH carrying the level 1 DCI is scrambled by using a first radio network temporary identifier RNTI, and the first RNTI corresponds to sensing.

13. The method according to any one of claims 1 to 10, wherein the method is applied to a first terminal device, and the first terminal device meets one or more of the following:
being in a radio resource control RRC inactive state;
being in an RRC idle state;
being in an RRC connected state and having a power consumption requirement lower than a first threshold;
being in a low power state; or
being configured to be in a low power mode.

14. The method according to claim 13, wherein the sensing method comprises one or more of a downlink angle of arrival DL AoA method, a downlink angle of departure DL AoD method, a time difference of arrival TDoA method, or multi-cell round trip time multi-RTT.

15. The method according to claim 13 or 14, wherein the sensing method comprises one or more of a sidelink SL AoA method, an SL AoD method, a TDOA method, or a round trip time RTT method.

16. The method according to claim 14, wherein
when a bandwidth capability of the first terminal device is greater than or equal to the first bandwidth, a sensing method used by the first terminal device is one or more of the DL AoA method, the DL AoD method, the TDoA method, or the multi-RTT; or
when a bandwidth capability of the first terminal device is less than the first bandwidth, a sensing method used by the first terminal device is the DL AoA method and/or the DL AoD method.

17. The method according to claim 15, wherein
when a bandwidth capability of the first terminal device is greater than or equal to the first bandwidth, a sensing method used by the first terminal device is one or more of the SL AoA method, the SL AoD method, the TDoA method, or the round trip time RTT method, or a sensing method used by the first terminal device is the TDoA method and/or the RTT method; or
when a bandwidth capability of the first terminal device is less than the first bandwidth, a sensing method used by the first terminal device is one or more of the SL AoA method, the SL AoD method, the TDOA method, or the round trip time RTT method.

18. The method according to any one of claims 1 to 17, wherein the first message is a sensing system message, and the sensing system message is used for sensing.

19. The method according to claim 3, wherein receiving the first message comprises:
receiving a response to the sensing capability, wherein the response comprises the first message.

20. The method according to claim 19, wherein a sensing signal is a part of the response.

21. The method according to any one of claims 1 to 20, wherein before receiving the first message, the method further comprises:
receiving a second message, wherein the second message is used to schedule the first message, and the second message comprises one or more of the following:
information about a first time window, indicating to detect the first message within the first time window; and
beam information, indicating a transmit beam for the first message.

22. The method according to claim 21, wherein the transmit beam for the first message is at least one beam that carries the second message.

23. A communication method, comprising:
sending a first message, wherein the first message comprises first resource information, and the first resource information indicates a resource for sensing information reporting; and
receiving sensing information on a first resource, wherein the first resource is associated with a preamble.

24. The method according to claim 23, wherein the sensing information comprises one or more of the following:
a result obtained by measuring at least one type of sensing signal bandwidth;
a sensing capability;
sensing measurement bandwidth indication information; or
preamble indication information.

25. The method according to claim 23 or 24, wherein the method further comprises:
sending a sensing capability request, wherein the sensing capability request is used to request to obtain a sensing capability of at least one terminal device; and
receiving a sensing capability from a first terminal device.

26. The method according to claim 25, wherein the sensing capability request is carried in a sensing system message, the sensing system message is used for sensing, the sensing system message further comprises a first condition and second resource information, the first condition indicates to obtain a sensing capability of at least one terminal device that meets the first condition, and the second resource information indicates a resource for reporting the sensing capability.

27. The method according to claim 26, wherein the resource indicated by the second resource information is associated with a preamble.

28. The method according to claim 26 or 27, wherein the first condition comprises one or more of the following:
a first signal quality threshold, indicating to request to obtain received signal quality of a terminal device whose received signal quality is higher than the first signal quality threshold;
at least one signal quality range, indicating to request to obtain received signal quality of a terminal device whose received signal quality is within the at least one signal quality range;
at least one bandwidth range, indicating to request to obtain a bandwidth capability of a terminal device whose bandwidth capability is within the at least one bandwidth range;
at least one bandwidth value, indicating to request to obtain a bandwidth capability of a terminal device whose bandwidth capability is the at least one bandwidth value;
first area information, indicating to request to obtain a sensing capability of a terminal device located in a first area;
a first angular resolution range, indicating to request to obtain a sensing capability of a terminal device whose angular resolution is within the first angular resolution range;
a first speed range, indicating to request to obtain a sensing capability of a terminal device within the first speed range; or
a first beam range, indicating to request to obtain a sensing capability of a terminal device corresponding to a beam that carries the sensing signal and that is within the first beam range.

29. The method according to claim 23, wherein the first message is further used to configure one or more of the following:
a transmission parameter of a sensing signal, a sensing method, a sensing result reporting manner, or a second condition, wherein the second condition indicates a terminal device that meets the second condition to perform sensing reporting.

30. The method according to claim 29, wherein the sensing signal comprises a synchronization signal and physical broadcast channel block SSB.

31. The method according to claim 29 or 30, wherein the second condition comprises one or more of the following:
a second signal quality threshold, indicating a terminal device whose received signal quality is higher than the second signal quality threshold to perform sensing reporting;
at least one signal quality range, indicating a terminal device whose received signal quality is within the at least one signal quality range to perform sensing reporting;
at least one bandwidth range, indicating a terminal device whose bandwidth capability is within the at least one bandwidth range to perform sensing reporting;
at least one bandwidth value, indicating a terminal device whose bandwidth capability corresponds to the at least one bandwidth value to perform sensing reporting;
second area information, indicating a terminal device located in the second area to perform sensing reporting;
a second angular resolution range, indicating a terminal device whose angular resolution is within the second angular resolution range to perform sensing reporting;
a second speed range, indicating a terminal device whose moving speed is within the second speed range to perform sensing reporting; or
a second beam range, indicating a terminal device corresponding to a beam that carries the sensing signal and that is within the second beam range to perform sensing reporting.

32. The method according to claim 31, wherein the sensing parameter comprises at least one bandwidth configuration, the at least one bandwidth configuration corresponds to at least one resource pool, the preamble associated with the first resource is selected from at least one resource pool corresponding to first bandwidth, and the first bandwidth is bandwidth of the sensing signal.

33. The method according to any one of claims 23 to 32, wherein the first message is carried in one or more of downlink control information DCI, sidelink control information SCI, or a media access control MAC control element CE, wherein
the DCI comprises level 1 DCI and level 2 DCI, the level 1 DCI is used to configure the transmission parameter of the sensing signal and a resource for a channel carrying the level 2 DCI, and the level 2 DCI is used to configure one or more of the sensing method, the first resource information, the preamble associated with the first resource, or the second condition;
the SCI comprises level 1 SCI and level 2 SCI, the level 1 SCI is used to configure the transmission parameter of the sensing signal and a resource for a channel carrying the level 2 SCI, and the level 2 SCI is used to configure one or more of the sensing method, the first resource information, the preamble associated with the first resource, or the second condition; and
the MAC CE comprises the first resource information and/or the preamble associated with the first resource.

34. The method according to claim 33, wherein a physical downlink control channel PDCCH carrying the level 1 DCI is scrambled by using a first radio network temporary identifier RNTI, and the first RNTI corresponds to sensing.

35. The method according to any one of claims 23 to 34, wherein the sensing method comprises one or more of a downlink angle of arrival DL AoA method, a downlink angle of departure DL AoD method, a time difference of arrival TDoA method, or multi round trip time multi-RTT.

36. The method according to any one of claims 23 to 35, wherein the sensing method comprises one or more of a sidelink SL AoA method, an SL AoD method, a TDOA method, or a round trip time RTT method.

37. The method according to claim 35, wherein
when a bandwidth capability of a terminal device is greater than or equal to the first bandwidth, a sensing method used by the terminal device is one or more of the DL AoA method, the DL AoD method, the TDoA method, or the multi-RTT; or
when a bandwidth capability of a terminal device is less than the first bandwidth, a sensing method used by the terminal device is the DL AoA method and/or the DL AoD method.

38. The method according to claim 36, wherein
when a bandwidth capability of the first terminal device is greater than or equal to the first bandwidth, a sensing method used by the first terminal device is one or more of the SL AoA method, the SL AoD method, the TDoA method, or the RTT, or a sensing method used by the first terminal device is the TDoA method and/or the RTT method; or
when a bandwidth capability of the first terminal device is less than the first bandwidth, a sensing method used by the first terminal device is the SL AoA method or the SL AoD method.

39. The method according to any one of claims 23 to 38, wherein sending the first message comprises:
sending a response to the sensing capability, wherein the response comprises the first message.

40. The method according to claim 39, wherein the sensing signal is a part of the response.

41. The method according to any one of claims 23 to 40, wherein before sending the first message, the method further comprises:
sending a second message, wherein the second message is used to schedule the first message, and the second message comprises one or more of the following:
information about a first time window, indicating to detect the first message within the first time window; and
beam information, indicating a transmit beam for the first message.

42. The method according to claim 41, wherein the transmit beam for the first message is at least one beam that carries the second message.

43. A communication apparatus, comprising:
a transceiver module, configured to receive a first message, and send sensing information on a first resource, wherein the first message comprises first resource information, the first resource information indicates the first resource, the first resource is a resource for sensing information reporting, and the first resource is associated with a preamble; and
a processing module, configured to determine the first resource based on the resource configuration information.

44. The apparatus according to claim 43, wherein the sensing information comprises one or more of the following:
a result obtained by measuring at least one type of sensing signal bandwidth;
a sensing capability;
sensing measurement bandwidth indication information; or
preamble indication information.

45. The apparatus according to claim 43 or 44, wherein the transceiver module is further configured to:
receive a sensing capability request, wherein the sensing capability request is used to request to obtain a sensing capability of at least one terminal device; and
report the sensing capability in response to the sensing capability request.

46. The apparatus according to claim 45, wherein the sensing capability request is carried in a sensing system message, the sensing system message is used for sensing, the sensing system message further comprises a first condition and second resource information, the first condition indicates to obtain a sensing capability of at least one terminal device that meets the first condition, and the second resource information indicates a resource for reporting the sensing capability.

47. The apparatus according to claim 46, wherein the resource indicated by the second resource information is associated with a preamble.

48. The apparatus according to claim 45 or 46, wherein the first condition comprises one or more of the following:
a first signal quality threshold, indicating to request to obtain received signal quality of a terminal device whose received signal quality is higher than the first signal quality threshold;
at least one signal quality range, indicating to request to obtain received signal quality of a terminal device whose received signal quality is within the at least one signal quality range;
at least one bandwidth range, indicating to request to obtain a bandwidth capability of a terminal device whose bandwidth capability is within the at least one bandwidth range;
at least one bandwidth value, indicating to request to obtain a bandwidth capability of a terminal device whose bandwidth capability is the at least one bandwidth value;
first area information, indicating to request to obtain a sensing capability of a terminal device located in a first area;
a first angular resolution range, indicating to request to obtain a sensing capability of a terminal device whose angular resolution is within the first angular resolution range;
a first speed range, indicating to request to obtain a sensing capability of a terminal device within the first speed range; or
a first beam range, indicating to request to obtain a sensing capability of a terminal device corresponding to a beam that carries the sensing signal and that is within the first beam range.

49. The apparatus according to claim 43, wherein the first message is further used to configure one or more of the following:
a transmission parameter of a sensing signal, a sensing method, a sensing result reporting manner, or a second condition, wherein the second condition indicates a terminal device that meets the second condition to perform sensing reporting.

50. The apparatus according to claim 49, wherein the sensing signal comprises a synchronization signal and physical broadcast channel block SSB.

51. The apparatus according to claim 49 or 50, wherein the second condition comprises one or more of the following:
a second signal quality threshold, indicating a terminal device whose received signal quality is higher than the second signal quality threshold to perform sensing reporting;
at least one signal quality range, indicating a terminal device whose received signal quality is within the at least one signal quality range to perform sensing reporting;
at least one bandwidth range, indicating a terminal device whose bandwidth capability is within the at least one bandwidth range to perform sensing reporting;
at least one bandwidth value, indicating a terminal device whose bandwidth capability corresponds to the at least one bandwidth value to perform sensing reporting;
second area information, indicating a terminal device located in the second area to perform sensing reporting;
a second angular resolution range, indicating a terminal device whose angular resolution is within the second angular resolution range to perform sensing reporting;
a second speed range, indicating a terminal device whose moving speed is within the second speed range to perform sensing reporting; or
a second beam range, indicating a terminal device corresponding to a beam that carries the sensing signal and that is within the second beam range to perform sensing reporting.

52. The apparatus according to claim 51, wherein the sensing parameter comprises at least one bandwidth configuration, the at least one bandwidth configuration corresponds to at least one resource pool, the preamble associated with the first resource is selected from at least one resource pool corresponding to first bandwidth, and the first bandwidth is bandwidth of the sensing signal.

53. The apparatus according to any one of claims 43 to 52, wherein the first message is carried in one or more of downlink control information DCI, sidelink control information SCI, or a media access control MAC control element CE, wherein
the DCI comprises level 1 DCI and level 2 DCI, the level 1 DCI is used to configure the transmission parameter of the sensing signal and a resource for a channel carrying the level 2 DCI, and the level 2 DCI is used to configure one or more of the sensing method, the first resource information, the preamble associated with the first resource, or the second condition;
the SCI comprises level 1 SCI and level 2 SCI, the level 1 SCI is used to configure the transmission parameter of the sensing signal and a resource for a channel carrying the level 2 SCI, and the level 2 SCI is used to configure one or more of the sensing method, the first resource information, the preamble associated with the first resource, or the second condition; and
the MAC CE comprises the first resource information and/or the preamble associated with the first resource.

54. The apparatus according to claim 53, wherein a physical downlink control channel PDCCH carrying the level 1 DCI is scrambled by using a first radio network temporary identifier RNTI, and the first RNTI corresponds to sensing.

55. The apparatus according to any one of claims 43 to 52, wherein the communication apparatus is a first terminal device, and the first terminal device meets one or more of the following:
being in a radio resource control RRC inactive state;
being in an RRC idle state;
being in an RRC connected state and having a power consumption requirement lower than a first threshold;
being in a low power state; or
being configured to be in a low power mode.

56. The apparatus according to claim 55, wherein the sensing method comprises one or more of a downlink angle of arrival DL AoA method, a downlink angle of departure DL AoD method, a time difference of arrival TDoA method, or multi round trip time multi-RTT.

57. The apparatus according to claim 55 or 56, wherein the sensing method comprises one or more of a sidelink SL AoA method, an SL AoD method, a TDOA method, or a round trip time RTT method.

58. The apparatus according to claim 56, wherein
when a bandwidth capability of the first terminal device is greater than or equal to the first bandwidth, a sensing method used by the first terminal device is one or more of the DL AoA method, the DL AoD method, the TDoA apparatus, or the multi-RTT; or
when a bandwidth capability of the first terminal device is less than the first bandwidth, a sensing method used by the first terminal device is the DL AoA method and/or the DL AoD method.

59. The apparatus according to claim 57, wherein
when a bandwidth capability of the first terminal device is greater than or equal to the first bandwidth, a sensing method used by the first terminal device is one or more of the SL AoA method, the SL AoD method, the TDoA method, or the RTT, or a sensing method used by the first terminal device is the TDoA method and/or the RTT method; or
when a bandwidth capability of the first terminal device is less than the first bandwidth, a sensing method used by the first terminal device is the SL AoA method and/or the SL AoD method.

60. The apparatus according to any one of claims 43 to 59, wherein the first message is a sensing system message, and the sensing system message is used for sensing.

61. The apparatus according to claim 45, wherein the transceiver module is specifically configured to:
receive a response to the sensing capability, wherein the response comprises the first message.

62. The apparatus according to claim 61, wherein a sensing signal is a part of the response.

63. The apparatus according to any one of claims 43 to 62, wherein before receiving the first message, the transceiver module is further configured to:
receive a second message, wherein the second message is used to schedule the first message, and the second message comprises one or more of the following:
information about a first time window, indicating to detect the first message within the first time window; and
beam information, indicating a transmit beam for the first message.

64. The apparatus according to claim 63, wherein the transmit beam for the first message is at least one beam that carries the second message.

65. A communication apparatus, comprising:
a transceiver module, configured to send a first message, and receive sensing information on a first resource, wherein the first message comprises first resource information, the first resource information indicates a resource for sensing information reporting, and the first resource is associated with a preamble; and
a processing module, configured to determine the first resource.

66. The apparatus according to claim 65, wherein the sensing information comprises one or more of the following:
a result obtained by measuring at least one type of sensing signal bandwidth;
a sensing capability;
sensing measurement bandwidth indication information; or
preamble indication information.

67. The apparatus according to claim 65 or 66, wherein the transceiver module is further configured to:
send a sensing capability request, wherein the sensing capability request is used to request to obtain a sensing capability of at least one terminal device; and
receive a sensing capability from a first terminal device.

68. The apparatus according to claim 67, wherein the sensing capability request is carried in a sensing system message, the sensing system message is used for sensing, the sensing system message further comprises a first condition and second resource information, the first condition indicates to obtain a sensing capability of at least one terminal device that meets the first condition, and the second resource information indicates a resource for reporting the sensing capability.

69. The apparatus according to claim 68, wherein the resource indicated by the second resource information is associated with a preamble.

70. The apparatus according to claim 67 or 68, wherein the first condition comprises one or more of the following:
a first signal quality threshold, indicating to request to obtain received signal quality of a terminal device whose received signal quality is higher than the first signal quality threshold;
at least one signal quality range, indicating to request to obtain received signal quality of a terminal device whose received signal quality is within the at least one signal quality range;
at least one bandwidth range, indicating to request to obtain a bandwidth capability of a terminal device whose bandwidth capability is within the at least one bandwidth range;
at least one bandwidth value, indicating to request to obtain a bandwidth capability of a terminal device whose bandwidth capability is the at least one bandwidth value;
first area information, indicating to request to obtain a sensing capability of a terminal device located in a first area;
a first angular resolution range, indicating to request to obtain a sensing capability of a terminal device whose angular resolution is within the first angular resolution range;
a first speed range, indicating to request to obtain a sensing capability of a terminal device within the first speed range; or
a first beam range, indicating to request to obtain a sensing capability of a terminal device corresponding to a beam that carries the sensing signal and that is within the first beam range.

71. The apparatus according to claim 65, wherein the first message is further used to configure one or more of the following:
a transmission parameter of a sensing signal, a sensing method, a sensing result reporting manner, or a second condition, wherein the second condition indicates a terminal device that meets the second condition to perform sensing reporting.

72. The apparatus according to claim 71, wherein the sensing signal comprises a synchronization signal and physical broadcast channel block SSB.

73. The apparatus according to claim 71 or 72, wherein the second condition comprises one or more of the following:
a second signal quality threshold, indicating a terminal device whose received signal quality is higher than the second signal quality threshold to perform sensing reporting;
at least one signal quality range, indicating a terminal device whose received signal quality is within the at least one signal quality range to perform sensing reporting;
at least one bandwidth range, indicating a terminal device whose bandwidth capability is within the at least one bandwidth range to perform sensing reporting;
at least one bandwidth value, indicating a terminal device whose bandwidth capability corresponds to the at least one bandwidth value to perform sensing reporting;
second area information, indicating a terminal device located in the second area to perform sensing reporting;
a second angular resolution range, indicating a terminal device whose angular resolution is within the second angular resolution range to perform sensing reporting;
a second speed range, indicating a terminal device whose moving speed is within the second speed range to perform sensing reporting; or
a second beam range, indicating a terminal device corresponding to a beam that carries the sensing signal and that is within the second beam range to perform sensing reporting.

74. The apparatus according to claim 73, wherein the sensing parameter comprises at least one bandwidth configuration, the at least one bandwidth configuration corresponds to at least one resource pool, the preamble associated with the first resource is selected from at least one resource pool corresponding to first bandwidth, and the first bandwidth is bandwidth of the sensing signal.

75. The apparatus according to any one of claims 65 to 74, wherein the first message is carried in one or more of downlink control information DCI, sidelink control information SCI, or a media access control MAC control element CE, wherein
the DCI comprises level 1 DCI and level 2 DCI, the level 1 DCI is used to configure the transmission parameter of the sensing signal and a resource for a channel carrying the level 2 DCI, and the level 2 DCI is used to configure one or more of the sensing method, the first resource information, the preamble associated with the first resource, or the second condition;
the SCI comprises level 1 SCI and level 2 SCI, the level 1 SCI is used to configure the transmission parameter of the sensing signal and a resource for a channel carrying the level 2 SCI, and the level 2 SCI is used to configure one or more of the sensing method, the first resource information, the preamble associated with the first resource, or the second condition; and
the MAC CE comprises the first resource information and/or the preamble associated with the first resource.

76. The apparatus according to claim 75, wherein a physical downlink control channel PDCCH carrying the level 1 DCI is scrambled by using a first radio network temporary identifier RNTI, and the first RNTI corresponds to sensing.

77. The apparatus according to any one of claims 65 to 76, wherein the sensing method comprises one or more of a downlink angle of arrival DL AoA method, a downlink angle of departure DL AoD method, a time difference of arrival TDoA method, or multi round trip time multi-RTT.

78. The apparatus according to any one of claims 65 to 77, wherein the sensing method comprises one or more of a sidelink SL AoA method, an SL AoD method, a TDOA method, or a round trip time RTT method.

79. The apparatus according to any one of claims 65 to 77, wherein the transceiver module is specifically configured to:
send a response to the sensing capability, wherein the response comprises the first message.

80. The apparatus according to claim 79, wherein the sensing signal is a part of the response.

81. The apparatus according to any one of claims 65 to 80, wherein before sending the first message, the transceiver module is further configured to:
send a second message, wherein the second message is used to schedule the first message, and the second message comprises one or more of the following:
information about a first time window, indicating to detect the first message within the first time window; and
beam information, indicating a transmit beam for the first message.

82. The apparatus according to claim 81, wherein the transmit beam for the first message is at least one beam that carries the second message.

83. A communication apparatus, wherein the communication apparatus comprises a processor and a memory, the memory is configured to store a computer program, and the processor is configured to execute the computer program stored in the memory, to enable the communication apparatus to perform the method according to any one of claims 1 to 22, or enable the communication apparatus to perform the method according to any one of claims 23 to 42.

84. A computer-readable storage medium, wherein the computer-readable storage medium is configured to store a computer program, and when the computer program is run on a computer, the computer is enabled to perform the method according to any one of claims 1 to 22, or the computer is enabled to perform the method according to any one of claims 23 to 42.

85. A computer program product, wherein the computer program product comprises a computer program, and when the computer program is run on a computer, the computer is enabled to perform the method according to any one of claims 1 to 22, or the computer is enabled to perform the method according to any one of claims 23 to 42.

86. A chip system, wherein the chip system comprises:
a processor and an interface, wherein the processor is configured to invoke instructions from the interface and run the instructions, and when the processor executes the instructions, the method according to any one of claims 1 to 22 is implemented, or the method according to any one of claims 23 to 42 is implemented.
